Europäisches Patentamt

European Patent Office

Office européen des brevets

(11) Veröffentlichungsnummer:  0 122 302

A1

(12) EUROPÄISCHE PATENTANMELDUNG

(21) Anmeldenummer: 83103542.3

(22) Anmeldetag: 13.04.83

(51) Int. Cl.³: G 06 K 13/08
G 06 K 7/08

(43) Veröffentlichungstag der Anmeldung:
24.10.84 Patentblatt 84/43

(84) Benannte Vertragsstaaten:
FR GB IT NL

(71) Anmelder: ddm hopt + schuler GmbH & Co. KG.
Heerstrasse 44
D-7210 Rottweil(DE)

(72) Erfinder: Hopt, Rudolf
Königsberger Strasse 18
D-7210 Rottweil(DE)

(72) Erfinder: Rapp, Hans-Jochen
Zollernstrasse 8
D-7210 Rottweil(DE)

(72) Erfinder: Birkle, Gebhard
Inselgasse 16
D-7750 Konstanz(DE)

(74) Vertreter: Patentanwälte Kohler - Schwindling - Späth
Hohentwielstrasse 41
D-7000 Stuttgart 1(DE)

(54) Vorrichtung zum Auslesen und/oder Einspeichern einer Information eines kartenförmigen Datenträgers.

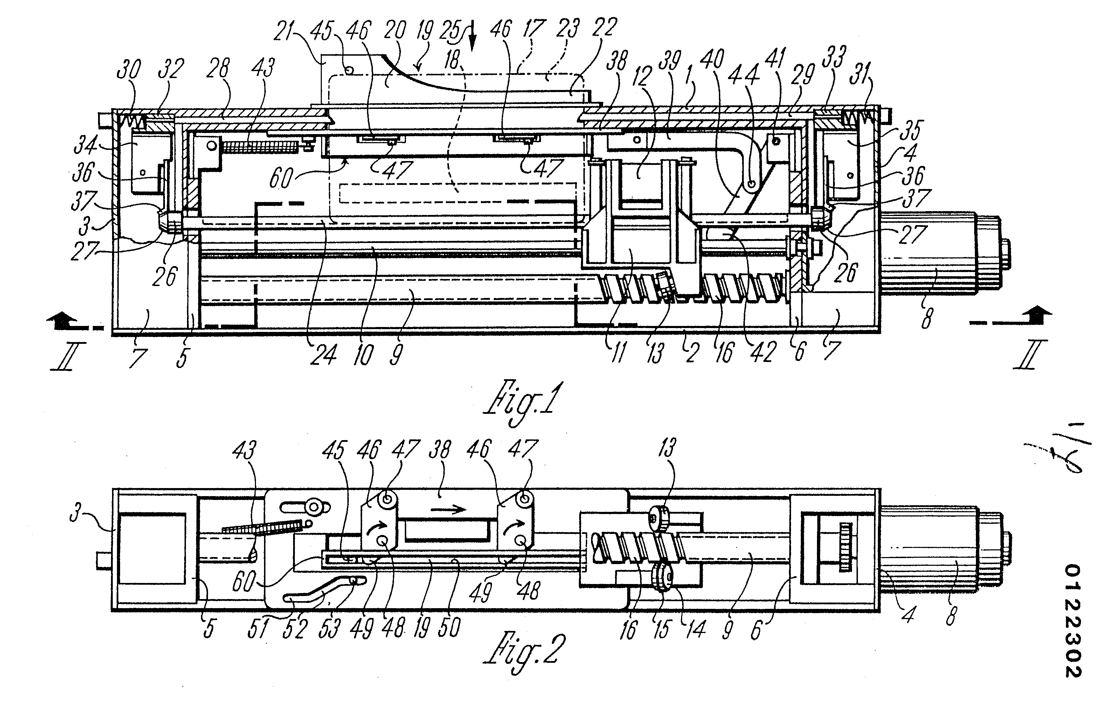

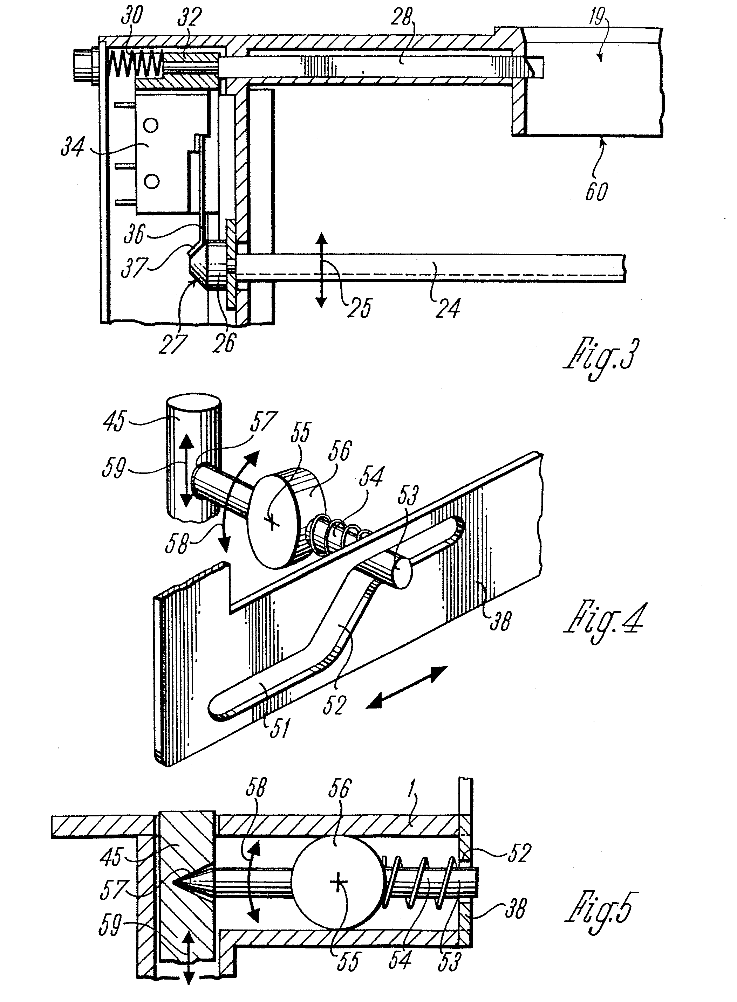

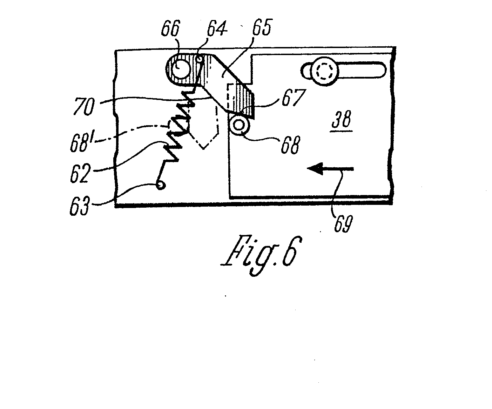

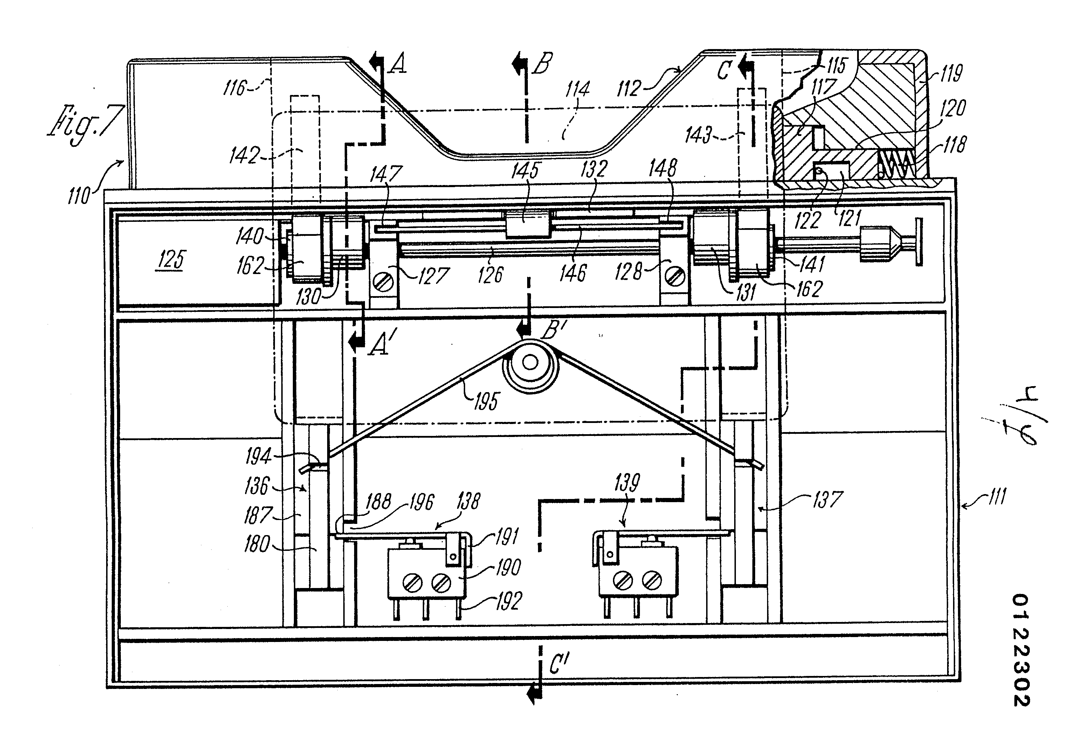

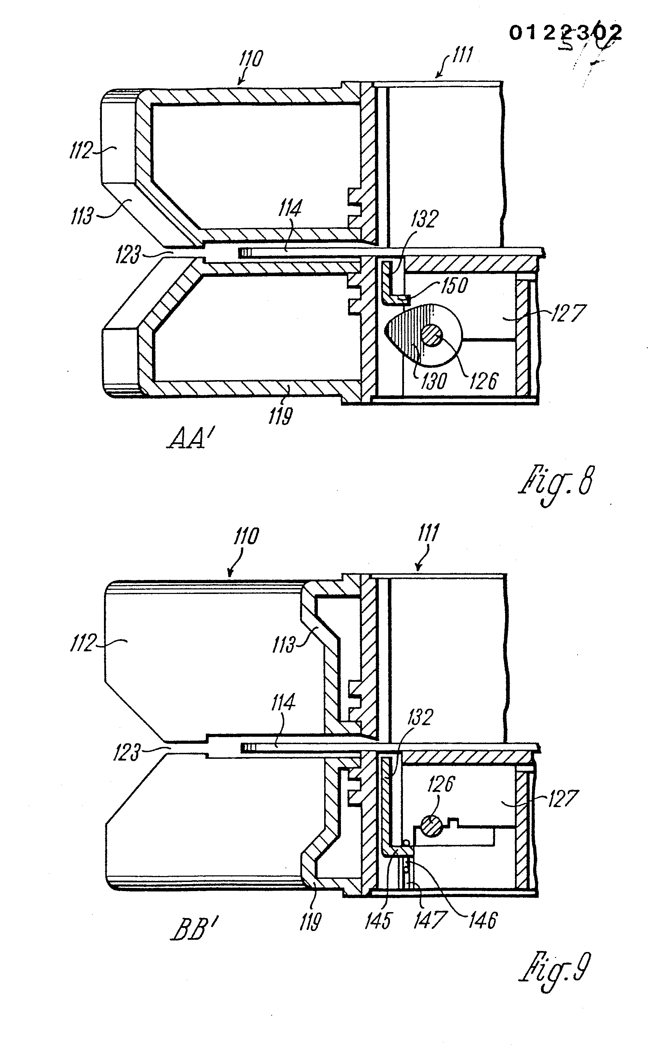

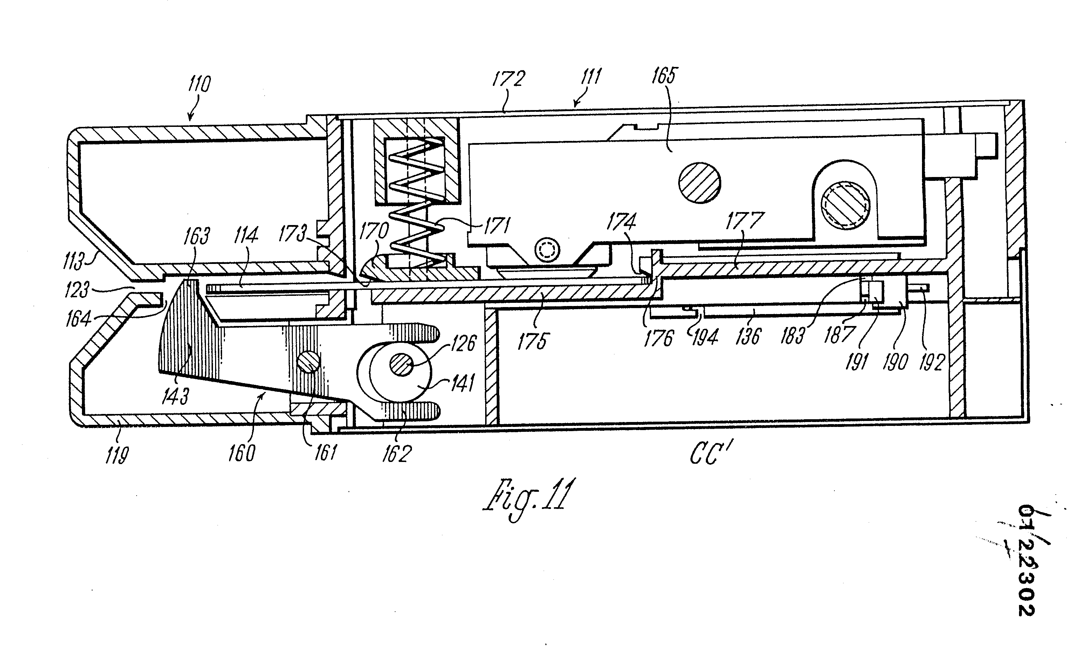

(57) Die Erfindung bezieht sich auf eine Vorrichtung zum Auslesen und/oder Einspeichern einer Information eines kartenförmigen Datenträgers. Sie besteht darin, daß an mindestens einem seitlichen Rand eines Schlitzes (19) zum Einstecken der Karte in die Vorrichtung mindestens ein Fühler (28, 29) vorgesehen ist, der nur dann ein Ingangsetzen des Informationsaustausches freigibt, wenn er sich in einer durch die Karte aufgelenkten Stellung befindet und/oder daß Verriegelungsglieder (45, 46) zum Festhalten der Karte (17) während des Informationsaustausches vorgesehen sind (Fig. 1).

Fig.1

EP 0 122 302 A1

Croydon Printing Company Ltd.

Anmelderin:

ddm hopt + schuler
GmbH & Co.KG
Heerstraße 42

7210 Rottweil

Stuttgart, den 13.4.1987
P 4117 W/Lö

Vertreter:

Kohler - Schwindling - Späth
Patentanwälte
Hohentwielstraße 41

7000 Stuttgart 1

Vorrichtung zum Auslesen und/oder Einspeichern einer Information eines kartenförmigen Datenträgers

Die Erfindung bezieht sich auf eine Vorrichtung zum Auslesen und/oder Einspeichern einer Information eines kartenförmigen Datenträgers. Diese, eine Information tragenden Karten dienen beispielsweise als Kreditkarten oder
Karten zur Identifizierung einer Person beim Betreten
eines Betriebes.

Bekannte Vorrichtungen der eingangs genannten Art dienen dazu, um Kreditkarten, Scheckkarten, Eintrittsausweise oder dergleichen zu identifizieren. Kartenleser, bei denen der Informationsaustausch bei im Kartenleser feststehender Karte erfolgt, weisen bisher eine feststehende Auslesevorrichtung auf, die beispielsweise auf Löcher, auf kapazitive oder induktive, in der Karte angeordnete Elemente anspricht. Bei anderen bekannten Kartenlesern ist die Information in einer auf der Karte angebrachten Magnetspur enthalten und die Karte wird von einer Antriebsvorrichtung mit konstanter Geschwindigkeit an einem feststehenden Magnetkopf vorbeigezogen, der die in der Magnetspur gespeicherte Information ausliest und/oder einspeichert, zum Beispiel bei Bankautomaten.

Derartige Vorrichtungen können so ausgebildet sein, daß entweder nur eine auf der Karte enthaltene Information ausgelesen wird, es ist aber auch möglich, zusätzlich eine Information in die Karte einzuschreiben, beispielsweise einen Kontostand. Im letztgenannten Fall kann eine an die Vorrichtung angeschlossene Datenverarbeitungsanlage den gegenwärtigen Kontostand von der Karte ablesen und eine Veränderung des Kontostandes wieder in die Karte einschreiben. Ein derartiges Verfahren kann beispielsweise bei Fahrausweisen verwendet werden, bei denen bei Fahrtantritt und Fahrtende entsprechende Signale erzeugt werden und die ermittelte Fahrstrecke in Form von Gebühreneinheiten so lange von der Karte "abgebucht" wird, bis der beim Kauf der Karte entrichtete Gesamtfahrpreis verbraucht ist.

Bei all den bekannten Kartenlesern, insbesondere denen mit
während des Informationsaustausches feststehenden Karten
besteht das Bedürfnis, daß die Karte beim Einstecken in den
Kartenleser in die richtige Ableseposition gelangt und daß
sie in dieser Ableseposition während des Informationsaustausches zwischen Karte und Auslesevorrichtung unverrückbar
stillsteht und auch bei Einwirkungen von außen nicht ihre
Lage ändern kann.

Dieses Problem hat man bisher dadurch gelöst, daß der
Kartenleser von Hand in ihn eingesteckte Karten übernimmt
und zum Informationsaustausch in eine von außen nicht mehr
zugängliche Position überführt, also unter dem Informationskopf vorbeibewegt und nach dem Ein- und/oder Auslesen wieder
in eine Position zurückbefördert, in der die Karte wieder
von außen mit der Hand ergriffen wird und abgenommen werden
kann. Fehlt ein derartiger Kartentransport, so darf die
Karte nur so weit in den Kartenleser eingesteckt werden,
daß ein Abschnitt der Karte noch von außen ergriffen wird
und nach dem Informationsaustausch wieder aus dem Gerät
von Hand herausgenommen werden kann.

Der Erfindung liegt daher die Aufgabe zugrunde einen Kartenleser mit einer während des Informationsaustausches
feststehenden Karte zu entwickeln, bei dem zur Erhöhung
der Betriebssicherheit und der Sicherung gegen Mißbrauch
der Informationsaustausch nur dann stattfindet, wenn die
Karte in der richtigen Position ist, und bei dem der Informationsaustausch nicht gestört werden kann, obwohl ein
Teil der Karte noch aus dem Gerät heraussteht und mit der
Hand ergriffen werden kann.

Diese Aufgabe wird gemäß der Erfindung zunächst dadurch gelöst, daß der Kartenleser an mindestens einem seitlichen Rand eines Schlitzes zum Einstecken der Karten mindestens ein Fühler vorgesehen ist, der nur dann ein Ingangsetzen des Informationsaustausches freigibt, wenn er sich in einer durch die Karte ausgelenkten Stellung befindet.

Werden in der üblichen Weise rechteckige Karten verwendet, so wird immer dann die Karte in der richtigen Lage in den Kartenleser eingesteckt, wenn der Schlitz des Kartenlesers nur um das notwendige Spiel breiter ist als die Länge der kleineren Rechteckseite. Durch das Maß des Einsteckschlitzes bedingt muß dann die Karte stets der Länge nach in den Kartenleser eingeführt werden. Dies hat jedoch den Nachteil, daß die Fläche, die zur Speicherung der Information auf der Karte zur Verfügung steht, im wesentlichen durch das Maß der Schmalseite des Rechtecks bestimmt ist. Entspricht jedoch die Breite des Einsteckschlitzes dem Maß der größeren Rechteckseite, so besteht die Möglichkeit, die Karte der Breite nach in diesen Schlitz einzustecken, so daß die für das Einspeichern der Information zur Verfügung stehende Fläche durch das Maß der längeren Rechteckseite bestimmt ist. Allerdings hat ein auf die längere Rechteckseite der Karte abgestimmter Einsteckschlitz den Nachteil, daß die Karte nicht nur, wie erwünscht, der Breite nach, sondern auch der Länge nach in den Einsteckschlitz eingeschoben werden kann, wodurch Möglichkeiten eines Mißbrauchs eröffnet werden.

Die erfindungsgemäße Ausbildung hat demgegenüber den Vorteil, daß nur dann der Informationsaustausch in Gang gesetzt wird, wenn die Karte der Breite nach eingesteckt wird. Die erfindungsgemäße Ausbildung kann jedoch nicht nur dann mit Vorteil verwendet werden, wenn die Karten der Breite nach in den Kartenleser eingeschoben werden, sondern auch dann, wenn Karten bestimmungsgemäß der Länge nach in den Kartenleser eingeschoben werden. In diesem Falle ist durch die Erfindung gewährleistet, daß nur solche Karten einen Informationsaustausch herbeiführen können, bei denen die Länge oder die Breite der Karte so genau mit der Schlitzbreite übereinstimmt, daß die Fühler in diesem Schlitz soweit ausgelenkt werden, daß der Informationsaustausch in Gang gesetzt wird.

Bei Ausführungsformen der Erfindung können an beiden seitlichen Rändern des Einsteckschlitzes einander gegenüber liegende Fühler vorgesehen sein, und die durch diese Fühler betätigten Schaltmittel können so hintereinander geschaltet sein, daß nur dann die Möglichkeit eines Informationsaustausches besteht, wenn beide Fühler in ihrer durch eine zugeordnete Karte ausgelenkten Stellung stehen. Es ist dann also nicht möglich, daß der Informationsaustausch durch eine schräg eingesteckte Karte eingeschaltet wird.

Die Erfindungsaufgabe wird außerdem dadurch gelöst, daß der Kartenleser mindestens eine Sperre zum Festhalten der Karte während des Informationsaustausches aufweist. Dadurch wird verhindert, daß die Karte während des Informationsaustausches bewegt werden kann, obwohl ein Teil der Karte sich noch außerhalb des Kartenlesers befindet.

Bei Ausführungsformen der Erfindung können an den seitlichen Rändern des Einsteckschlitzes angeordnete Fühler
mit der zuletzt erwähnten Sperre zum Festhalten der Karte
kombiniert sein, so daß durch das Zusammenwirken dieser
beiden Merkmale dem bei gewissen Verwendungszwecken des
Kartenlesers erhöhten Sicherheitsbedürfnissen entsprochen
wird.

Die Erfindung kann sowohl bei Ausführungsformen mit Vorteil
angewendet werden, bei denen die Ablesevorrichtung in dem
Kartenleser gerätefest angeordnet ist als auch bei Kartenlesern, bei denen ein Informationskopf über die auf der
Karte magnetisch oder auf andere Weise eingespeicherte
Information durch einen geräteeigenen Antrieb hinwegbewegt wird.

Bei einer Ausführungsform der Erfindung ist mindestens ein
das Einschieben der Karte begrenzender Anschlag beweglich
angeordnet, der nur in einer durch die Karte ausgelenkten
Stellung den Informationsaustausch frei gibt. Dies hat den
Vorteil, daß nur eine vollständige in den Leser eingesteckte
Karte den Informationsaustausch frei gibt und bei einem vorzeitigen Herausziehen der Karte aus dieser Endlage der
Informationsaustausch sofort unterbrochen wird. Dies eröffnet die Möglichkeit, unvollständige Informationen sofort
wieder zu löschen, was beispielsweise bei Kreditkarten mit
automatischer Einspeicherung des in Anspruch genommenen
Kredits in die Karte Fehlermöglichkeiten weitgehend unterbindet.

Die erfindungsgemäße Sperre kann bei Ausführungsformen der
Erfindung auf verschiedene Art und Weise ausgebildet sein.
Bei einer Ausführungsform der Erfindung ist die Sperre als
ein in eine Aussparung der Karte eingreifender Anschlag ausgebildet. Bei anderen Ausführungsformen der Erfindung ist
die Sperre als ein am rückwärtigen Rand der Karte angreifendes Verriegelungsglied ausgebildet, zum Beispiel als beweglicher, in Sperrstellung den hinteren Rand der Karte übergreifender Haken. Diese Ausführungsformen haben den Vorteil,
daß die Karte keine Aussparung aufweisen muß und daher handelsübliche Rohlinge verwendet werden können. Andererseits
hat eine Aussparung in der Karte, in die bei eingesteckter
Karte ein Verriegelungsglied eingreift, den Vorteil, daß
diese Aussparung als zusätzliches Identifizierungsmerkmal
dient; Karten, die die Aussparung nicht aufweisen, werden
von dem Kartenleser nicht angenommen.

Bei einer Ausführungsform der Erfindung weist ein das
äußere Ende des Einsteckschlitzes begrenzender Gehäuseteil
einen Abschnitt, der bei vollständig in den Schlitz eingesteckter Karte über das hintere Kartenende hinausragt, und
einen zweiten Abschnitt auf, über den das hintere Ende der
vollständig eingesteckten Karte hinausragt. In dem ersten
Abschnitt kann beispielsweise ein Verriegelungsglied, z.B.
ein axial verschiebbarer Stift, gelagert sein, der beim Informationsaustausch hinter dem rückwärtigen Rand der Karte
in den Schlitz eingreift und so die Karte verriegelt. Der
andere Gehäuseabschnitt dagegen tritt gegenüber dem hinteren Rand der Karte zurück, so daß im Bereich dieses Abschnittes die vollständig eingesteckte Karte immer noch

./.

mit der Hand bequem erfaßt und nach dem Informationsaustausch und der Entriegelung der Karte wieder aus dem Kartenleser herausgenommen werden kann.

Bei Ausführungsformen der Erfindung kann die Sperre auch
oder zusätzlich die Karte gegen eine Unterlage anpreßende
Hebel aufweisen, die vorzugsweise nach Art von Klemmgesperren beweglich geführt sein können. Dabei können die Antriebe der beiden Sperrvorrichtungen miteinander gekoppelt
sein. Auch dadurch ergibt sich eine sichere Verriegelung
der Karte während des Informationsaustausches. Außerdem
hat diese Ausführungsform der Erfindung den Vorteil, daß
sie Karten, die durch das Tragen in der Tasche etwas gewölbt
sind, durch das Anpressen gegen eine ebene Unterlage gerade
richtet, so daß ein über die Karte geführter Informationskopf eine ebene Informationsspur vorfindet.

Bei weiteren Ausführungsformen der Erfindung ist eine Einrichtung zum Ingangsetzen des Informationsaustausches durch
ein beim Einschieben der Karte bewegtes Teil vorbereitbar
und durch einen Endanschlag auslösbar. Auch diese Ausführungsform dient der zusätzlichen Sicherung gegen Mißbrauch
und Beschädigung. Die den Informationsaustausch vornehmenden
Teile sind meist empfindlich, sie sollen, wenn diese Teile
nicht feststehen sondern im Gehäuse über die Karte hinweg
bewegbar angeordnet sind, nicht in den Bereich des Schlitzes
bewegt werden können, wenn ein anderer Gegenstand als die
Karte gegen den Endanschlag gedrückt wird. Daher wird bei
einer Ausführungsform der Erfindung das beim Einschieben
der Karte bewegte Teil durch ein oder zwei der bereits im

./.

vorhergehenden beschriebene Fühler gebildet, die seitlich in den Einsteckschlitz hineinragen und das Seitenmaß der Karte abtasten.

Das Vorbereiten durch ein beim Einschieben der Karte bewegtes Teil und das Auslösen durch einen Endanschlag kann in üblicher Weise über Mikroschalter erfolgen, die beispielsweise hintereinander geschaltet sind und beispielsweise in den Stromkreis eines Antriebsmotors eingeschaltet sind, der mit Hilfe einer Gewindespindel einen Antriebskopf über die auf der Karte enthaltene Information hinweg bewegt wird. Um jedoch einen besonderen Grad der Betriebssicherheit zu gewinnen, wird dieses Vorbereiten und Auslösen des Informationsaustausches bei anderen Ausführungsformen der Erfindung mechanisch verwirklicht.

Bei Ausführungsformen der Erfindung ist ein Gehäuse eines Schalters für das Ingangsetzen des Informationsaustausches in zwei Stellungen bewegbar geführt und seine Bewegung in zumindest eine der beiden Stellungen ist von der Bewegung eines durch das Einschieben der Karte bewegten Teiles abgeleitet, also beispielsweise von der Bewegung eines oder mehrerer die Breite der Karte abtastenden Fühler, und die Bewegung eines auf das Betätigungsglied des Schalters einwirkenden Teiles ist von der Bewegung des das Einschieben der Karte begrenzenden Anschlages geleitet. Dabei können die Schalter mit den Fühlern mechanisch verbunden sein und daher in Achsrichtung der Fühler beweglich sein.

Damit die Bewegung der Fühler und des Endanschlages mechanisch hintereinander geschaltet sind, weisen, wenn die Bewegung des Endanschlages rechtwinklig zu der Bewegung der Fühler und des Schalters verläuft, das Betätigungsglied und das auf dieses einwirkende, mit dem Endanschlag verbundene Teil schräg zu ihrer Bewegungsrichtung verlaufende, aneinander zur Anlage kommende Schrägflächen auf. Dadurch wird erreicht, daß sich rechtwinklig zueinander verlaufende Bewegungen in dem Abstand der Schrägflächen addieren und nur dann, wenn beide Teile eine Bewegung durchgeführt haben, das Betätigungsglied des Schalters entweder vollständig entlastet ist oder aber vollständig gedrückt ist.

Die Bewegung der die Sperre bildenden Teile in die Sperrstellung kann vom Antrieb eines Informationskopfes abgeleitet sein. Bei anderen Ausführungsformen der Erfindung erfolgt die Bewegung der die Sperre bildenden Teile in die Sperrstellung jedoch durch Federwirkung. Dies hat den Vorteil, daß hierdurch auch die Karten nur anpreßende Sperrglieder sicher betätigt werden können, denn diese können im Gegensatz zu den Aussparungen in der Karte durchsetzenden Riegeln wegen den Toleranzen der Kartendicke oder bei etwas gebogenen Karten nicht bei jeder Karte ganz genau die gleiche Sperrstellung einnehmen.

Diese Ausführungsform der Erfindung kann dahingehend weiter ausgebildet sein, daß die Bewegung eines die Sperrglieder entgegen der Federwirkung in der entsperrten Lage haltenden Sicherungsgliedes in seine Entsicherungsstellung von der Bewegung eines Informationskopfes innerhalb eines ersten Bewegungsabschnittes abgeleitet ist, wobei der Informationskopf erst nach Durchlaufen des ersten Bewegungsabschnittes und
damit erst nach Entsichern der die Karte verriegelnden
Sperrglieder die auf der Karte enthaltene Spur erreicht,
in der die Information eingespeichert ist.

Diese Ausführungsform der Erfindung kann dahingehend weiter
ausgebildet sein, daß in dem Gehäuse ein Schieber verschiebbar geführt ist, von dessen Bewegung die Bewegung der Sperrglieder abgeleitet ist, daß an dem Schieber eine ihn in eine
der Sperrstellung der Sperrglieder entsprechende Arbeitsstellung ziehende Feder angreift und daß eine Hebelübersetzung vorgesehen ist, über die der Schieber von dem sich
zurückbewegenden Informationskopf entgegen der Wirkung der
Feder in seine Ruhelage bewegbar ist.

Bei Ausführungsformen der Erfindung sind die als Klemmgesperre wirkenden Sperrhebel als zweiarmige Winkelhebel ausgebildet, deren eines Ende in dem Schieber schwenkbar gelagert ist und deren anderes Ende zum Eingriff in den Einsteckschlitz bestimmt ist, dessen Winkelscheitel jedoch in
dem Gehäuse schwenkbar gelagert ist. Dabei ist der Abstand
der Lagerachse im Gehäuse von der Lagerachse im Schieber
größer als der Abstand der Lagerachse im Gehäuse von dem in
den Einsteckschlitz eingreifenden Hebelende. Der Winkel des
einen Hebelarmes, der die beiden Lagerachsen miteinander
verbindet, zu dem anderen Hebelarm des Winkelhebels, der die
am Winkelscheitel befindliche Lagerachse mit dem freien, in
den Einsteckschlitz eingreifenden Hebelendes verbindet, ist
so gewählt, beispielsweise zwischen 150 und 170°, daß mit verhältnismäßig geringen, die Schwenkbewegung der Hebel bewirkenden Kräften ein sehr hoher Anpreßdruck der in den Einsteckschlitz eingreifenden und die Karte auf die Unterlage
anpreßenden Hebelenden erzeugt wird.

Bei Ausführungsformen der Erfindung ist die Bewegung eines
in den Einsteckschlitz des Gerätes eingreifenden Verriegelungsstiftes ebenfalls von der Bewegung des Schiebers abgeleitet. Beispielsweise kann der Schieber eine Schrägführung
aufweisen, in die das innere Ende eines zweiarmigen Hebels
eingreift, der in dem Gehäuse schwenkbar gelagert ist und
dessen äußeres Ende in eine Aussparung eines Verriegelungsstiftes eingreift, der in dem Gehäuse quer zum Einsteckschlitz beweglich hinter dem rückwärtigen Ende der vollständig eingeführten Karte in den Einsteckschlitz einführbar ist. Dies ergibt eine besonders einfache Ausbildung des
Antriebs des Sicherungsstiftes.

Bei Ausführungsformen der Erfindung besteht der Endanschlag
aus einer Schiene mit einem nach der Einschubseite hin
offenen U-Profil, wobei die Schiene in Einschubrichtung beweglich gelagert ist. Außerdem kann bei Ausführungsformen
der Erfindung zwischen der den Endanschlag bildende Schiene
und dem inneren Ende des Einsteckschlitzes ein Zwischenraum
bestehen. Diese Ausbildung eignet sich besonders für Ausführungsformen der Erfindung, bei denen die Karte durch einen
beweglichen Informationskopf abgetastet wird. Dieser Zwischenraum ermöglicht es dann, daß von einem beweglichen
Wagen, der den Informationskopf über die Informationsspur
auf der Karte führt, eine Gegendruckrolle an die Unterseite
der Karte angedrückt wird.

Eine weitere Möglichkeit zur Manipulation der Vorrichtung
liegt darin, daß flache Gegenstände durch den Einführungsschlitz für die Karte in die Vorrichtung eingeführt werden
können, dabei ist es weiterhin möglich, das Innere der
Vorrichtung, insbesondere die sehr empfindliche Schreib-/-
Leseeinheit zu beschädigen.

Der Erfindung liegt ferner die Aufgabe zugrunde, einen
Kartenleser mit einer während des Informationsaustausches
feststehenden Karte zu entwickeln, bei dem zur Erhöhung der
Betriebssicherheit und der Sicherung gegen Mißbrauch das
Einstecken der Karte erst dann ermöglicht wird und der Informationsaustausch nur dann stattfindet, wenn die Karte
in der richtigen Position ist, und bei dem der Informationsaustausch nicht gestört werden kann, obwohl ein Teil der
Karte noch aus dem Gerät heraussteht und mit der Hand ergriffen werden kann.

Diese weitere Aufgabe wird gemäß der Erfindung dadurch gelöst, daß der Fühler bei teilweise eingesteckter Karte ausgelenkt wird und eine das vollständige Einstecken der Karte
versperrende bzw. freigebende erste Sperre betätigt.

Diese erfindungsgemäße Vorrichtung hat damit den erheblichen
Vorteil, daß ein Informationsaustausch schon alleine dadurch
unterbunden wird, daß ein anderer Gegenstand als eine Karte
mit vorgegebenen Abmessungen überhaupt nicht in die Vorrichtung eingesteckt werden kann. Ein Mißbrauch der Vorrichtung
oder eine Beschädigung ist damit weitgehend ausgeschlossen.

Die letztgenannte Aufgabe wird gemäß der Erfindung weiterhin dadurch gelöst, daß die zweite Sperre bei vollständig eingesteckter Karte den Einsteckweg hinter der Karte an mindestens zwei Punkten versperrt.

Diese nebengeordnete Lösung der Erfindungsaufgabe hat den wesentlichen Vorteil, daß ein Herausziehen der Karte während des Informationsaustausches dadurch unmöglich wird, daß der Weg der Karte vollkommen versperrt wird. Gegenüber Einrichtungen, bei denen die Karte im eingesteckten Zustand mit einer Klemmvorrichtung von oben oder unten gehalten wird, hat die erfindungsgemäße Anordnung den Vorteil, daß ein Herausziehen der Karte selbst "mit Gewalt" nicht möglich ist. Dies betrifft auch Anordnungen, bei denen die Karte an ihrer Rückseite lediglich von einem einzelnen Sperrstift am seitlichen Kartenrand verriegelt wird, so daß die Karte bei kräftigem Angreifen am nichtverriegelten Kartenrand unter Umständen verkantet werden kann. Damit ist ein vollkommen sicherer und gegen Manipulationen und Störungen praktisch vollkommen gesicherter Betrieb während des Datenaustausches möglich.

Eine besonders perfekte Sicherung der Vorrichtung und des Arbeitsablaufes beim Datenaustausch ergibt sich dann, wenn in bevorzugter Ausgestaltung der Erfindung die beiden nebengeordneten Lösungen gemeinsam oder in Kombination mit den eingangs genannten Merkmalen eingesetzt werden.

Weiterhin ist eine Ausführungsform bevorzugt, bei der die Sperren durch ein gemeinsames Betätigungsorgan betätigt werden. Hiermit ergibt sich eine Minimierung der erforderlichen Bauelemente, ein besonders kompakter Aufbau und eine hohe Betriebssicherheit.

Besonders vorteilhaft ist dabei, das Betätigungsorgan als motorisch angetriebene Welle mit Exzentern auszubilden. Bei einem derartigen elektromechanischen Betätigungsorgan ist einmal eine flexible Arbeitsweise durch entsprechende Ansteuerung des Motors möglich, zum anderen ist die Betätigung der Sperren durch Exzenter besonders betriebssicher und kann auch ausreichende mechanische Kräfte ausüben.

Erfindungsgemäß kann zum Betätigen der ersten Sperre, die den Schlitz in das Innere der Vorrichtung überhaupt erst freigibt, diese durch erste Exzenter betätigt werden, die dann in Betrieb gesetzt werden, wenn die Karte die seitlich angeordneten Fühler betätigt. Sieht man dabei an jeder Seite des Schlitzes je einen Fühler in einem Abstand vor, bei dem beide Fühler nur dann betätigt werden, wenn eine Karte einer vorgegebenen Breite in den Schlitz eingesteckt wird, ist ein sicheres Erkennen einer vorgegebenen Kartenbreite möglich. Erfindungsgemäß betätigen die Fühler dabei Schalter, die logisch so verschaltet sind, vorzugsweise in Reihenschaltung, daß der Motor nur bei gleichzeitigem Ansprechen beider Schalter betätigt wird. Mit einer sehr einfachen Kodierung ist es daher möglich, vorgegebene Kartenformate sicher zu erkennen.

0122302

Wird die erste Sperre als ein den Schlitz in Ruhestellung verschließendes Blechteil ausgebildet, ist ein besonders einfacher und betriebssicherer Aufbau möglich. Bei kompaktem Aufbau des Geräteinneren kann das Blechteil so dicht geführt werden, daß ein gewaltsames Einführen eines Gegenstandes gegen das den Schlitz verschließende Blechteil praktisch unmöglich ist.

Um das Blechteil von den Exzentern betätigen zu können, wird es bevorzugt mit Laschen versehen, die von den Exzentern betätigt werden. Auf diese Weise kann eine Steuerung der Motordrehung in einfacher Weise in eine zur Einsteckbahn der Karte senkrechte Bewegungsrichtung des Blechteils umgesetzt werden.

Wird das Blechteil erfindungsgemäß federnd aufgehängt, insbesondere indem ein Federdraht in einer an das Blechteil angeformten Lasche befestigt wird und an seinen Enden, vorzugsweise durch an Lagerböcken der Welle angeformte Aussparungen gehalten wird, kann eine Steuerung vorgesehen werden, bei der der Exzenter die Laschen des Blechteils in der Ruhestellung betätigt und das Blechteil vor den Schlitz schiebt, während bei eingeschobener Karte der Exzenter von der Lasche abhebt und das Blechteil dann vom Federdraht federnd aufgehängt gehalten wird. Diese Betriebsweise garantiert, daß bei verschlossenem Schlitz durch den Eingriff des Exzenters an der Lasche ein besonders stabiler Verschluß erzielt wird, während bei eingeschobener Karte das als Sperre dienende Blechteil lediglich lose federnd aufgehängt sein kann.

Die zweite Sperre, die die Karte im vollständig eingesteckten Zustand festhält, wird bevorzugt von zweiten Exzentern
betätigt, die ebenfalls von dem Motor angetrieben werden.
Die zweite Sperre wird nur dann betätigt, wenn die Karte in
vollständig eingestecktem Zustand Schalter betätigt. Auch
diese elektromechanische Verriegelung kann - wie weiter oben
schon ausgeführt - besonders einfach und wirkungsvoll aufgebaut werden.

Eine besonders gute Wirkung wird dabei dadurch erzielt, daß
die Karte im eingesteckten Zustand mit ihren Randbereichen
der in die Vorrichtung hineinweisenden Vorderkante zwei
Schalter betätigt, die logisch so geschaltet sind, vorzugsweise in Reihenschaltung, daß der Motor nur bei gleichzeitigem Ansprechen beider Schalter betätigt wird. Wie bereits
oben zur Betätigung der ersten Sperre ausgeführt, können auf
diese Weise nur Karten mit vorgegebenen Dimensionen die
Vorrichtung betätigen. Während jedoch die seitlichen Fühler
der ersten Sperre auf ein korrektes Breitenmaß der Karte
ansprechen, sprechen die in Einsteckrichtung der Karte
wirkenden Schalter für die zweite Sperre auf eine gleichmäßige Höhe der Karte an, so daß bei der eingangs erwähnten
möglichen Kombination der beiden nebengeordneten erfindungsgemäßen Lösungen eine Überwachung beider Kartendimensionen
möglich ist.

Durch Vorsehen der genannten Maßnahmen kann erfindungsgemäß
eine Zeitsteuerung vorgesehen werden, die nach Wirksamwerden
der zweiten Sperre eine Schreib-/Leseeinheit für den Datenaustausch von oder zu der Karte einschaltet und nach Beendigung des Datenaustausches die zweite Sperre wieder freigibt.

./.

Diese Zeitsteuerung stellt demnach sicher, daß die Karte während des Datenaustausches unverrückbar feststeht und unmittelbar nach Beendigung des Datenaustausches wieder von Hand entommen werden kann.

In bevorzugter Ausgestaltung der Erfindung wird die zweite Sperre von Haken gebildet, die in der Arbeitsstellung den bei eingesteckter Karte von der Vorrichtung wegweisenden Rand der Karte umfassen. Mit diesen Haken kann demnach sicher verhindert werden, daß die Karte während des Datenaustausches von Hand aus der Vorrichtung entfernt wird.

Erfindungsgemäß umfaßt die Vorrichtung ein Stirnteil, das eine sich in horizontaler Richtung erstreckende Einbuchtung aufweist, derart, daß bei eingesteckter Karte deren mittlerer Bereich der Hinterkante noch mit der Hand ergriffen werden kann, während die seitlichen Ränder der Hinterkante sich bereits im Stirnteil befinden. Die Haken sind dabei im Stirnteil angeordnet. Diese Anordnung hat den besonderen Vorteil, daß ein Ergreifen der Karte von Hand nur in einem begrenzten Kartenbereich möglich ist, wenn diese vollständig in die Vorrichtung eingesteckt ist. Die mechanisch von Hand auf die Karte ausübbaren Kräfte sind damit beschränkt, wenn man sich vor Augen hält, daß die Karten üblicherweise aus Kunststoff mit glatter Oberfläche bestehen und bei der vorgesehenen Einbuchtung die Karte praktisch nur mit zwei Fingern ergriffen werden kann. Abgesehen von der Sicherung durch die genannten Haken kann damit auch nur eine verhältnismäßig geringe Kraft auf die Karte ausgeübt werden. Da die seitlichen Ränder der Hinterkante der Karte bei der geschilderten Anordnung bereits im Inneren des Stirnteils angeordnet sind, können in diesem Bereich die Haken der zweiten Sperre wirksam werden, ohne von außen sichtbar oder zugänglich zu sein. Damit sind auch die die zweite Sperre bildenden Haken vor Fremdeingriffen und damit Beschädigungen weitgehend geschützt, da sie nur in ihrer Arbeitsstellung in den die Einsteckbahn für die Karte bildenden Schlitz eingreifen und damit von außen praktisch nicht zugänglich sind.

Besonders bevorzugt ist eine Ausführungsform, bei der die Haken einen Arm eines um eine Achse schwenkbaren Hebels bilden, dessen anderer Arm in eine Gabel ausläuft, die zweite, auf der Welle angeordnete Exzenter umschließt. Die Verriegelung der Karte durch die zweite Sperre wird demnach durch Schwenkhebel gebildet, deren einer Arm die genannten Haken bildet. Die Auslenkung des Schwenkhebels kann in der genannten Form sehr einfach durch Verdrehen der Welle mit den darauf befindlichen Exzentern erfolgen. Auch diese Anordnung ist mechanisch besonders einfach und erlaubt es, ausreichende mechanische Kräfte innerhalb der zweiten Sperre wirksam werden zu lassen. Auch eine exakte Steuerung der Eingriffshöhe der Haken, die innerhalb des Schlitzes genau einzustellen ist, ist durch die genannte Anordnung möglich, da eine eindeutige Zuordnung des Verdrehwinkels der Exzenter zum Schwenkwinkel des Hebels mit dem daran angeformten Haken besteht.

Die zweite Sperre wird bevorzugt dadurch in Betrieb gesetzt, daß die Karte die Schalter über Schieber betätigt. Dieses Zwischenschalten von Schiebern zwischen Karte und Schalter hat den Vorteil, daß einmal die Schalter an praktisch beliebiger Stelle des Geräteinneren positioniert werden können
und daß zum anderen zusätzliche konstruktive Maßnahmen
möglich sind, beispielsweise eine federnde Betätigung der
Schalter, eine exakte Definition eines Anschlages für die
Karte und eine streng lineare Führung der Karte mit der
bereits erwähnten Erkennung, ob die Tiefe der Karte ein
bestimmtes Maß aufweist.

Erfindungsgemäß ist im Inneren der Vorrichtung ein Tisch
bzw. ein Boden angeordnet, der eine Führung für die Schieber
aufweist. Auf diese Weise kann ein Verkanten der Betätigungsvorrichtung für die Schalter sicher verhindert werden.

Gleitet die Karte beim Einstecken auf dem Tisch, kann sie
gleichfalls gegen Verkanten gesichert geführt werden. Bevorzugt stößt sie in vollständig eingestecktem Zustand gegen
einen, den Übergang vom Tisch zum Boden bildenden Anschlag,
so daß die Soll-Lage der Karte im vollständig eingesteckten
Zustand definiert ist. Werden dabei mehrere, beispielsweise
die genannten zwei Schalter von der Karte betätigt, kann -
wie erwähnt - das Tiefenmaß an beiden seitlichen Rändern der
Karte überprüft werden. Darüber hinaus stellen die hinter
die Hinterkante der Karte greifenden Haken sicher, daß keine
Karte mit unzulässig großer Kartentiefe die Vorrichtung in
Betrieb setzen kann, da eine derartige, unzulässig  tiefe
Karte das Einschwenken der Haken hinter deren Hinterkante
verhindern würde.

Weiterhin ist eine Ausführungsform bevorzugt, bei der die
Schieber an ihrem an die Karte stoßenden Ende mit einer
Führungsschräge versehen sind. Dies hat den Vorteil, daß auch abgenutzte Karten, deren Ränder schon leicht aufgewölbt oder aufgefächert sind, sicher von den Schiebern aufgenommen werden, so daß eine definierte Auslenkung der Schieber erfolgt.

Eine besonders sichere und verkantungsfreie Führung der Schieber bei gleichzeitiger sicherer und definierter Auslösung der Schalter wird dadurch bewirkt, daß die Schieber zum Führen mit federartigen Flanschen versehen sind, von denen mindestens einer einen Anschlag für einen Schaltarm der Schalter bildet.

Die sichere Führung der Karte in der Vorrichtung kann weiter dadurch verbessert werden, daß ein Niederhalter vorgesehen ist, der die Karte beim Einstecken in die Vorrichtung vorzugsweise elastisch hält.

Um auch bei Verwendung eines derartigen Niederhalters das Einführen von stark benutzten Karten mit aufgebogenem oder aufgefächertem Rand zu ermöglichen, ist der Niederhalter bevorzugt an seinem der Karte beim Einstecken zuweisenden Ende mit einer Führungsschräge versehen.

Weitere Merkmale der Erfindung ergeben sich aus der folgenden Beschreibung einer Ausführungsform der Erfindung in Verbindung mit den Ansprüchen und der Zeichnung. Die einzelnen Merkmale können je für sich oder zu mehreren bei Ausführungsformen der Erfindung verwirklicht sein. Die Zeichnung zeigt nur die zum Verständnis der Erfindung erforderlichen Teile einer Ausführungsform des erfindungsgemäßen Kartenlesers schematisch:

.·/.

Fig. 1          zeigt eine Draufsicht auf eine Ausführungsform des erfindungsgemäßen Gerätes
teilweise geschnitten.

Fig. 2          zeigt einen Schnitt nach der Linie II-II
der Fig. 1 ohne die in Fig. 1 eingezeichnete Karte.

Fig. 3          zeigt eine Einzelheit in größerem Maßstab.

Fig. 4,5 und 6   zeigen jeweils Einzelheiten in größerem
Maßstab.

Fig. 7          eine Darstellung einer Ausführungsform
einer erfindungsgemäßen Vorrichtung von
unten;

Fig. 8          eine Schnittdarstellung entlang der Linie
AA' von Fig. 7 in vergrößertem Maßstab;

Fig. 9          eine Schnittdarstellung entlang der Linie
BB' von Fig. 7 in vergrößertem Maßstab;

Fig. 10a + b     die Darstellung einer Sperre in vergrößertem Maßstab;

Fig. 11         eine Schnittdarstellung entlang der Linie
CC' von Fig. 7 in vergrößertem Maßstab;

Fig. 12a,b + c   eine Darstellung in Seitenansicht und im
Schnitt eines Schiebers in vergrößerter
Darstellung.

Bei der in der Zeichnung dargestellten Ausführungsform der
Erfindung weist ein Gehäuse eines Kartenlesers eine vordere
Gehäusewand 1 und eine hintere Gehäusewand 2 auf, die durch
Seitenwände 3 und 4 sowie Zwischenwände 5 und 6 miteinander
verbunden sind. Die obere Wand 7 ist in Fig. 1 nur teilweise
und weggebrochen gezeichnet, in den anderen Figuren ist sie
nicht gezeichnet, sie erstreckt sich über das gesamte Gehäuse. An der Seitenwand 4 ist ein Antriebsmotor 8 befestigt, der über ein nicht gezeichnetes Getriebe eine Gewindespindel 9 antreibt, die in den Zwischenwänden 5 und 6
drehbar gelagert ist. In diesen Zwischenwänden 5 und 6 ist
außerdem noch im Abstand von der Gewindespindel 9 eine
Führungsstange 10 befestigt, auf der ein Wagen 11 geführt
ist, der in einem Abstand von der Führungsstange 10 einen
Magnetkopf 12 und auf der dem Informationskopf 12 abgewandten Seite der Führungsstange 10 Rollen 13 und 14
trägt. Die Rolle 14 weist an ihrem Umfang eine Wulst 15 auf,
mit der sie in den Gewindegrund der Gewindespindel eingreift. Der Umfang der Rolle 13 ist zylinderförmig, sie
wälzt sich auf dem Zwischenraum 16 zwischen dem Gewindegrund
der Gewindespindel ab. Die Rollen 13 und 14 werden durch
nicht gezeichnete Federn gegeneinandergedrückt. Dreht sich
die Gewindespindel 9, so wird der Wagen 11 durch die Rolle
14 längs des Führungsstabes 10 verschoben.

In Fig. 1 unterhalb des Magnetkopfes 12 befindet sich in
einem geringen Abstand von diesem eine Andrückrolle, die im
Bereich der in das Gehäuse eingesteckten Karte 17 diese gegen den Magnetkopf 12 drückt, der über der Magnetspur 18
hinweggleitet, in der die Informationen eingespeichert sind.

In der Vorderwand 1 des Gehäuses befindet sich ein Einsteckschlitz 19, der nur wenig breiter als die Längsseite der
rechteckigen Karte 17 ist und dessen Höhe nur wenig größer
ist als die Dicke einer derartigen Karte.

Zwischen dem inneren Ende 60 des Einsteckschlitzes 19 und
der Anschlagschiene 24 besteht ein Zwischenraum, in den der
Magnetkopf 12 und die Andrückrolle des Wagens 11 hineinragen
und in dem sich diese Teile durch den Wagen 11 geführt bewegen.

Das äußere Ende des Einsteckschlitzes 19 ist durch einen Gehäuseteil 20 begrenzt, der einen Abschnitt 21 aufweist, der
bei vollständig in den Schlitz 19 eingesteckter Karte 17
über das hintere Kartenende hinausragt und der einen zweiten
Abschnitt 22 aufweist, über den das hintere Ende 23 der
vollständig in den Schlitz eingesteckten Karte 17 hinausragt. An diesem hinteren Ende 23 kann die Karte 17 beim Einstecken gehalten und nach dem Informationsaustausch wieder
aus dem Schlitz 19 herausgezogen werden.

Die Einschiebebewegung der Karte 17 in den Schlitz 19 wird
durch eine Anschlagschiene 24 begrenzt, die in den Zwischenwänden 5 und 6 in Einschubrichtung 25 der Karte 17 gegen die
Wirkung einer nicht gezeichneten Feder verschiebbar geführt
ist. Die durch die Zwischenwände 5 und 6 hindurchtretenden
Enden der Schiene 24 tragen je einen Kopf 26, der eine
Schrägfläche 27 trägt, die, weil der Kopf 26 auf die Enden
der Schiene 24 aufgeschraubt ist und daher seine bei aufgeschraubtem Kopf eingenommene Stellung nicht vorhersehbar
ist, als Konus ausgebildet ist. Die das Einschieben der Karte 17 begrenzende Schiene 24 besteht aus einem zur Einschubseite hin offenen U-Profil, in das das vordere Ende der
in den Schlitz 19 eingesteckten Karte eintritt, so daß diese
auch bei starkem Eindrücken nicht nach oben oder unten herausspringen kann.

In der vorderen Gehäusewand sind Fühler 28 und 29 verschiebbar gelagert, die durch Federn 30 und 31 an einander gegenüberliegenden Stellen seitlich in den Einsteckschlitz 19
eingedrückt werden. Diese Fühler 28 und 29 tasten das Maß
der zwischen ihnen befindlichen Karte ab. An den hinteren
Enden 32 und 33 der Fühler 28 und 29 sind die Gehäuse der
Schalter 34 und 35 befestigt, die sich daher bei einer
Axialverschiebung der Fühler 28 und 29 beim Einschieben der
Karte 17 in den Einsteckschlitz 19 ebenfalls in Achsrichtung
der Fühler 28 und 29 verschieben. Das Betätigungsglied 36
der Schalter 34 und 35 weist eine Schrägfläche 37 auf, die
durch seine abgebogene Zunge gebildet wird und die einen
Winkel von etwa 45° zu der Achsrichtung der Fühler 28, 29
bildet.

Werden die Fühler 28, 29 durch das Einstecken der Karte nach
außen gedrückt, so wird der Schalter 34 zwar in der gleichen
Richtung ebenfalls nach außen bewegt, das Betätigungsglied
36 bleibt jedoch aufgrund der Wirkung einer an ihm angreifenden Feder an der Schrägfläche 27 des Kopfteils 26 der Anschlagschiene angelegt. Die hierbei geringe Schwenkbewegung
des Betätigungsgliedes 36 des Schalters 34 betätigt den
Schalter 34 noch nicht. Erst wenn durch das Einstecken der
Karte die Schiene 24 in Fig. 3 nach unten bewegt wird, entfernt sich der Kopf 26 so weit von dem abgebogenen Ende des Betätigungsgliedes 36 des Schalters 34, daß das Betätigungsglied 36 seine volle Schwenkbewegung unter Wirkung der nicht gezeichneten Feder durchführen und den Schalter 34 betätigen kann. Wird lediglich die Schiene 24 durch eine Karte nach unten bewegt, die nicht auch gleichzeitig die Fühler 28 und 29 nach außen drückt, so bewegt sich lediglich der Kopf 26 nach unten, das Betätigungsglied 36 bleibt jedoch wiederum unter geringer Verschwenkung an dem Kopf 26 in Anlage. Diese geringe Verschwenkung des Betätigungsgliedes 36 reicht aber wiederum nicht aus, um den Schalter 34 umzulegen.

Die Schalter 34 und 35 an den beiden Enden des Gerätes sind elektrisch hintereinander geschaltet, so daß der Stromkreis nur geschlossen wird, wenn beide Schalter 34 und 35 betätigt sind.

An der Innenseite der Gehäusewand 1 ist ein Schieber 38 quer zur Richtung des Einsteckschlitzes verschiebbar geführt. An dem Schieber ist ein Hebel 39 schwenkbar gelagert, dessen anderes Ende an einem Hebel 40 in einem Abstand von dessen Anlenkung 41 bei 42 schwenkbar gelagert ist. Wenn der Magnetkopf 12 in seine Ruhestellung zurückfährt, so kommt er in der in Fig. 1 gezeichneten Stellung zur Anlage an das dem gehäusefesten Anlenkpunkt 41 abgewandte Ende 42 des Hebels 40 und verschwenkt auf seinem Weg zwischen der Stellung, in dem der Magnetkopf 12 die Karte bereits verlassen hat und seiner Endstellung oder Ruhestellung am linken Ende der Gewindespindel 9 den Hebel 40 im Gegenuhrzeigersinn. Diese Schwenkbewegung des Hebels 40 bewegt den Schieber 38 entgegen der Wirkung einer an ihm angreifenden Feder 43 in Fig. 1 und
2 nach rechts in die Ruhestellung.

Verläßt der Wagen 11 seine Ruhestellung, so verschwenkt
sich im ersten Abschnitt seiner Verschiebebewegung bis zu
der Stellung, in der der Magnetkopf 12 die Karte 17 erreicht, der Hebel 40 unter der Wirkung der Feder 43 in dem
Maße, in dem sich der Wagen 11 aus seiner Ruhestellung entfernt. Der Schieber 38 bewegt sich nach links und bleibt
dann in einer Arbeitsstellung stehen, in der sich auch das
Hebelende 42 von dem Wagen 11 löst, so daß der Wagen 11
während dem Informationsaustausch, also während der Magnetkopf 12 über die Magnetspur 18 der Karte 17 fährt, den Hebel
40 nicht berührt.

Von der Bewegung des Schiebers 38 ist die Bewegung von
Sperrgliedern 45 und 46 abgeleitet, die die Karte 17 in der
voll in den Einsteckschlitz 19 eingeführten Stellung während
des Informationsaustausches verriegeln. Hierzu sind an dem
Schieber 38 die einen Enden von Klemmteilen 46 um je eine
Achse 47 schwenkbar gelagert. In einem Abstand von der Achse
47 sind die Teile 46 um eine gehäusefeste Achse 48 ebenfalls
schwenkbar gelagert, so daß die Enden 49 der Klemmteile 46
bei der Bewegung des Schiebers 38 eine Schwenkbewegung um die
Achse 48 durchführen. Hierzu greifen die Achsbolzen 47 mit
etwas Spiel in die Klemmteile 46 ein. Die Verbindungslinie
zwischen den Enden 49 und der Achse 48 bildet einen Winkel
von etwa $150^{\circ}$ mit der Verbindungslinie der Achsen 47 und 48
und der Abstand der Enden 49 von der Achse 48 ist wesentlich
kleiner als der Abstand zwischen den Achsen 47 und 48.

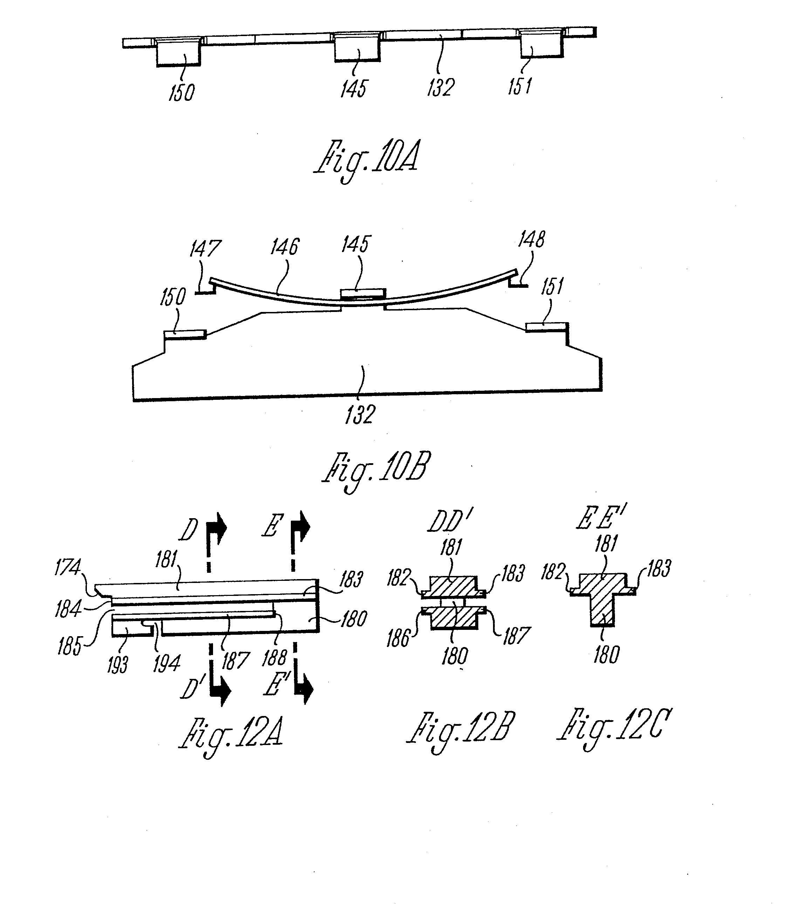

Außerdem weisen die Enden 49 eine Rundung auf, an die anschließend der Rand des Klemmteiles 46 schräg nach oben verläuft, so daß bereits bei einer verhältnismäßig kleinen Bewegung des Schiebers 38 nach rechts die Teile 46 den Schlitz 19 vollständig frei geben. In Fig. 2 sind die Teile 46 in ihrer Eingriffsstellung gezeichnet, in der sie eine in den Schlitz 19 eingeführte, nicht gezeichnete Karte gegen eine tischartige Unterlage 50 pressen.

Der Schieber 38 weist noch eine Schlitzführung 51 auf, deren Mittelteil 52 schräg verläuft. In diese Schlitzführung greift das innere Ende 53 eines schwenkbar gelagerten Stabes 54 ein, der um die Achse 55 einer in der in Fig. 4 nicht gezeichneten Gehäusewand 1 gelagerten Lagerscheibe 56 schwenkbar gelagert ist. Das dem Ende 53 des Hebels 54 abgewandte Ende 57 greift in eine Aussparung eines Verriegelungsstiftes 45 ein. Bei Verschwenkung des Stabs 54 in Richtung des Doppelpfeiles 58 verschiebt sich daher der Verriegelungsstift 45 in Richtung des Doppelpfeiles 59. Dieser Verriegelungsstift 45 ist quer zur Ebene des Einsteckschlitzes 19 in dem Gehäuseabschnitt 21 verschiebbar gelagert, in seiner in Fig. 4 oberen Stellung greift er hinter dem rückwärtigen Ende der Karte 17 in den Einsteckschlitz 19 ein und verriegelt die Karte 17 in dieser Stellung.

Wird eine dem Lesegerät zugeordnete Karte 17 in den Einsteckschlitz 19 eingeführt, so bewegt diese Karte zunächst die an den seitlichen Rändern des Einsteckschlitzes einander gegenüber angeordneten Fühler 28, 29 etwas nach außen, so daß die Schalter 34 und 35 sich ebenfalls nach außen bewegen und dadurch das Ingangsetzen des Informationsaustausches vorbereiten. Ist die Karte 17 vollständig eingeführt, so bewegt sich die einen Endanschlag bildende Schiene
24 in Fig. 3 etwas nach unten, so daß die an den beiden
Enden der Schiene 24 angeordneten Köpfe die Betätigungsglieder 36 der beiden Schalter 34 und 35 freigeben. Diese
in einem Stromkreis hintereinander liegenden Schalter 34
und 35 schalten dann über weitere Zwischenglieder, Mikroprozessoren oder dergleichen den Antriebsmotor 8 ein.

Dadurch bewegt sich der Wagen 11 aus seiner Stellung in Anlage an die Zwischenwand 6 nach links in die in Fig. 1 dargestellte Lage. Dieser Bewegung folgt der Hebel 40 unter
Wirkung der Feder 43, so daß sich der Schieber 38 in Fig. 2
nach links bewegt. Hierdurch treten die Enden 49 der Klemmglieder 46 von oben in den Schlitz 19 ein und pressen die
Karte nach unten gegen den Tisch 50. Zugleich wandert das
Ende 53 des Hebels 54 in dem schrägen Abschnitt 52 der
Schlitzführung 51 in Schlitzrichtung und bewegt dadurch den
Verriegelungsstift 45 in Schließstellung, der hinter dem
rückwärtigen Ende der Karte 17 in den Einsteckschlitz 19
eintritt und die Karte 17 zusätzlich verriegelt. Diese Verriegelungsbewegungen sind abgeschlossen, bevor der Magnetkopf 12 die Karte 17 erreicht.

Der Magnetkopf 12 wird dann durch Antrieb der Gewindespindel 9 über die auf der Karte 17 aufgebrachte Spur 18 hinweggeführt, in der die Informationen eingespeichert sind.
Während dieser Bewegung findet der Informationsaustausch
statt, der Magnetkopf liest die eingespeicherte Information aus oder speichert Informationen in die Spur 18 ein. An dem in Fig. 1 linken Ende der Bewegung wird die Drehrichtung der Spindel 9 umgesteuert, der Wagen läuft zurück und nimmt dann im letzten Bewegungsabschnitt das Ende 42 des Hebels 40 mit in die Ruhestellung. Dadurch wird der Schieber 38 nach rechts verschoben, die Enden 49 der Glieder 46 werden aus dem Einsteckschlitz 19 herausgeschwenkt und der Stift 45 wird in dem Gehäuseteil 21 nach unten verschoben, so daß auch er nicht mehr in den Einsteckschlitz 19 hineinragt. Nun kann die Karte 17 an dem aus dem Gehäuseabschnitt 22 herausstehenden Ende 23 ergriffen und wieder aus dem Schlitz 19 herausgezogen werden, die Anschlagschiene 24 sowie die Schalter 34 und 35 und die Fühler 28 und 29 bewegen sich wieder in ihre Ausgangsstellung zurück. Durch eine nicht gezeichnete Schaltung ist der Antrieb der Spindel 9 bereits abgeschaltet worden, nachdem der Wagen 11 seine Ruhestellung am linken Ende der Spindel erreicht hat.

In Fig. 6 ist eine Ausführungsform dargestellt, bei der anstelle der Feder 43 eine Feder 62 vorgesehen ist, deren eines Ende wiederum an einem Bolzen 63 des Gehäuses befestigt ist und deren anderes Ende bei 64 an einer Lasche 65 angreift, die um einen gehäusefesten Bolzen 66 schwenkbar gelagert ist. Das freie Ende der Lasche 65 weist eine Fläche 67 auf, die auf einer Rolle 68 aufliegt, die auf dem Schieber 38 drehbar gelagert ist. Die Zugfeder 62 ist bestrebt, die Lasche 65 im Uhrzeigersinn zu verschwenken.

In Fig. 6 ist die Ruhestellung der Teile gezeichnet, wenn auch der Wagen 11 sich in Ruhestellung befindet. Die durch die Zugfeder 62 auf die Lasche 65 ausgeübte verhältnismäßig große Kraft wird durch die Neigung der Schrägfläche 67, die in dieser Stellung der Lasche etwa einen Winkel zwischen $20^o$ und $45^o$ zu der Bewegungsrichtung 69 des Schiebers 38 aufweist, in Komponenten aufgeteilt, so daß in Richtung der Bewegungsrichtung 69 nur ein kleiner Teil der Kraft der Feder 62 wirkt. Je weiter aber die Feder 62 die Lasche 65 im Uhrzeigersinn um den Bolzen 66 schwenkt und je weiter sich der Schieber 38 in der Richtung 69 verschiebt, desto größer wird der Winkel, den die Schrägfläche 67 mit der Bewegungsrichtung 69 des Schiebers bildet und desto größer wird die Kraftkomponente, die in der Bewegungsrichtung 69 wirkt. Während der Schwenkbewegung rollt sich die Schrägfläche 67 an der Rolle 68 ab.

In der Endphase der Verschiebebewegung 69 des Schiebers 38 und damit in der Endphase der Schwenkbewegung der Lasche 65 kommt die Fläche 70 der Lasche 65 zur Anlage an die Rolle 68 wobei die Fläche 70 in dieser Schwenklage nahezu rechtwinklig zu der Richtung 69 und daher in einem Winkel zu der Fläche 67 verläuft. In dieser Bewegungsphase stimmt die Richtung der durch die Lasche 65 auf die Rolle 68 ausgeübte Kraft mit der Bewegungsrichtung 69 überein und erreicht ihre maximale Größe. Die Kraft, mit der der Schieber 38 in seine Arbeitsstellung geschoben wird, erhöht sich daher, je näher sich der Schieber seiner Endstellung nähert. Daher nimmt auch die Kraft zu, mit der die Klemmteile 46 in ihre Klemmstellung geführt werden und die Karte 17 gegen die Auflagefläche 50 pressen.

Bei der Bewegung von der Arbeitsstellung in die Ruhestellung greift der Kopf 11 an der Hebelübersetzung 42, 40, 44,
39 an, die so ausgelegt ist, daß sie die vom Wagen 11 nach
dem Verlassen der Karte auf das Hebelende 42 ausgeübte
Kraft verstärkt. Dadurch wird der Schieber 38 entgegen der
von der Fläche 70 auf die Rolle 68 ausgeübten Kraft und
unter Überwindung des durch die Klemmung der Teile 46 auf
der Karte 17 entstehenden Reibungswiderstandes, also unter
Aufhebung der Selbstsperrung der Klemmung dieser Teile, in
seine Ausgangsstellung zurückbewegt.

Bei der in den Figuren 6 bis 12 dargestellten Vorrichtung
zum Auslesen und/oder Einspeichern einer Information eines
kartenförmigen Datenträgers bezeichnet 110 ein Stirnteil
und 111 ein Gehäuseteil. Das Stirnteil 110 ist, wie man besonders gut aus Fig. 7 und 8 erkennt, mit einer Einbuchtung
versehen, die sich einmal in horizontaler Richtung erstreckt,
wie es mit 112 bezeichnet ist zum anderen aber auch in vertikaler Richtung, wie dies in Fig. 8 mit 113 bezeichnet ist.
Die Einbuchtung läuft in einen Schlitz 123 aus, in den eine
Karte 114 entlang einer Einsteckbahn 115, 116 einschiebbar
ist.

In den Figuren bis 12 ist durchgehend die Karte 114 in einer
Stellung eingezeichnet, in der sie vollkommen in die Vorrichtung eingesteckt ist. Wie man in Fig. 7 im Teilschnitt
rechts oben erkennt, trifft die Karte 114 auf ihrem Weg
entlang der Einsteckbahn 115, 116 dann, wenn sie zunächst
in das Stirnteil 110 eingesteckt wird, auf einen ersten Schieber 117, der bei nicht eingesteckter Karte 114 über
die Einsteckbahn 115 hinaus in den Schlitz 123 hineinragt.
Bei eingesteckter Karte 114 jedoch wird der erste Schieber
117, wie in Fig. 7 eingezeichnet, nach rechts gegen die
Kraft einer Feder 118 ausgelenkt, die sich an einer Wandung
119 des Stirnteiles 110 abstützt. Der erste Schieber 117
bewegt sich dabei entlang einer Führung 120 und ein in eine
Aussparung 121 des ersten Schieber 117 reichender Stift 122
eines in Fig. 7 nicht dargestellten Schalters wird ausgelenkt. Mit diesem Mechanismus ist es demnach möglich, das
Einführen der Karte 114 in den Schlitz 123 entlang der Einsteckbahn 115, 116 zu erkennen.

Sieht man an beiden gegenüberliegenden Enden des Schlitzes
123 eine derartige Fühlereinrichtung vor, kann auf einfache
Weise erkannt werden, ob eine Karte mit zulässiger Breite
eingeführt wird, da nur eine derartige Karte gleichzeitig
die auf den beiden Seiten des Schlitzes 123 angeordneten
Fühler betätigt. Man kann beispielsweise beide von den
Fühlern betätigte Schalter in Reihe schalten, so daß insgesamt ein Signal nur dann durchgeschaltet wird, wenn eine
Karte der korrekten Breite eingesteckt wird.

Wird in der vorstehend beschriebenen Weise das Einstecken
einer Karte der korrekten Breite erkannt, wird - beispielsweise über die erwähnte Reihenschaltung zweier Schalter -
ein Motor 125 kurzzeitig mit Versorgungsspannung beschaltet.
Der Motor 125 dreht eine Welle 126, die in Lagerböcken 127,
128 gelagert ist. Die Welle 126 trägt zum einen ein erstes Exzenterpaar 130, 131. Dieses Exzenterpaar 130, 131 betätigt in weiter unten noch im einzelnen dargestellter Weise eine erste Sperre 132, die bei dem in der Figur dargestellten Ausführungsbeispiel die Form eines Bleches hat, das den Schlitz 123 bei nicht eingesteckter Karte 114 im Bereich des Eintrittes des Schlitzes 123 in das Gehäuseteil 111 versperrt. Diese erste Sperre verhindert damit ein mögliches Manipulieren des Gerätes, da der Schlitz 123 bei nicht eingesteckter Karte verschlossen ist. Erst wenn, wie geschildert, eine Karte 114 mit korrekter Breite in den Schlitz 123 eingesteckt wird, gibt die erste Sperre 132 durch kurzzeitiges Betätigen des Motors 125 und Verdrehen der Exzenter 130, 131 den Weg für die Karte 114 in das Gehäuseteil 111 frei.

In diesem Falle kann die Karte 114 entlang der Einsteckbahn 115, 116 in das Gehäuseteil 111 eingeschoben werden und stößt dort auf zweite Schieber 136, 137, die in weiter unten noch im einzelnen geschilderter Weise im Gehäuseteil 111 verschieblich angeordnet sind. In einer definierten Endstellung betätigen die zweiten Schieber 136, 137 Schalter 138, 139, die beispielsweise ebenfalls in Reihe liegen können, damit erst ein Betätigen beider Schalter 138, 139 durch eine Karte korrekter Größe zum Schließen eines Stromkreises führt. Dieser Stromkreis betätigt den Motor 125 erneut kurzzeitig, so daß nunmehr ein weiteres, zweites Exzenterpaar 140, 141, das ebenfalls auf der Welle 126 angeordnet ist, wirksam wird. Das zweite Exzenterpaar 140, 141 betätigt eine zweite Sperre in Gestalt zweier Haken 142, 143, die hinter die Rückseite der Karte 114 fassen und diese gegen Herausziehen fixieren. Auf diese Weise
wird die Karte 114 während des Datenaustausches festgehalten, so daß ein Lese- oder Schreibwerk 165 den Datenaustausch von der Vorrichtung auf die Karte 114 ungestört
vornehmen kann.

Anhand der Fig. 7, 8 bis 10 soll nun die Funktion der
ersten Sperre im einzelnen geschildert werden.

Wie man aus Fig. 10a und b im einzelnen erkennt, besteht
die erste Sperre 132 aus einem Blechteil, das an der Oberseite abgeschrägt ist. Eine erste Lasche 145 ist an der
Mitte der Oberseite der ersten Sperre 132 angebracht. Unterhalb der ersten Lasche 145 ist ein Federdraht 146 angeordnet, der in Aussparungen 147, 148, die an die Lagerböcke
127, 128 angeformt sind, eingreift.

An den Seiten sind oben an die Sperre 132 eine zweite Lasche 150 sowie eine dritte Lasche 151 angeformt. Diese Laschen 150, 151 stehen in Wirkverbindung mit dem ersten Exzenterpaar 130, 131. In Fig. 8 ist der Exzenter 130 in einer Stellung eingezeichnet, in die er durch den Motor 125
nach Betätigung des ersten Schiebers 117 durch die Karte
114 verdreht wurde. Der Exzenter 130 greift in dieser
Stellung nicht an die Lasche 150 an, so daß die erste
Sperre 132, vom Federdraht 146 elastisch gehalten, im Gehäuseteil 111 nach unten durchhängen kann. In dieser
Stellung gibt die erste Sperre 132, wie man aus Fig. 8
und 9 erkennt, den Weg für die Karte 114 frei.

Wird hingegen die Karte 114 wieder aus der Vorrichtung entfernt, wird der erste Schieber 117 nicht mehr ausgelenkt
und der Motor 125 dreht sich in seine Ausgangsstellung
zurück.

Dabei wird der erste Exzenter 130 in Uhrzeigerrichtung gedreht und greift demzufolge, wie man aus Fig. 8 erkennt, an
der Lasche 150 an. Der Exzenter 130 schiebt dann die Lasche
150 nach oben, so daß die erste Sperre 132 die Öffnung des
Schlitzes 123 im Gehäuseteil 111 versperrt.

Die Funktion der durch die Haken 142, 143 gebildeten zweiten Sperre soll nun ausführlich anhand von Fig. 11 erläutert werden:

Wie man erkennt, ist im Stirnteil 110 an jeder Seite ein
Hebel 160 angeordnet, der um eine Schwenkachse 161 drehbar
ist. Der eine Hebelarm läuft in eine Gabel 162 aus, die den
zweiten Exzenter 141 umfaßt, während der andere Hebelarm
den Haken 143 bildet. Wie man ohne weiteres erkennt, wird
der Hebel 160 beim Drehen der Welle 126 über den zweiten
Exzenter 141 in der Gabel 162 verdreht, so daß in der Betätigungsstellung des Hebels 160 dessen Ende 163 durch
eine Öffnung 164 der Wandung 119 des Stirnteiles 110 reicht
und die Karte 114 gegen Herausziehen aus dem Stirnteil 110
sichert. Der Haken 143 bleibt so lange in der in Fig. 11
eingezeichneten Stellung, bis die Schreib-/Leseeinheit 165
den Datenaustausch zwischen Karte 114 und der Vorrichtung
vollendet hat. Nach' Abschluß des Datenaustausches wird der
Motor 125 wieder eingeschaltet und die Welle 126 mit dem
zweiten Exzenter 141 dreht sich wieder so lange, bis das Ende 163 des Hakens 143 sich wieder in die Öffnung 164 zurückgezogen hat. Die Karte 114 kann dann wieder aus der Vorrichtung entnommen werden.

Die Betätigung der Schalter 138, 139 durch die zweiten Schieber 136, 137 wird nun ausführlich anhand der Fign. 11 und 12 erläutert.

Wie man aus Fig. 11 erkennt, stößt die Karte 114 nach ihrem Eintritt in das Gehäuseteil 111 zunächst auf einen Niederhalter 170, der von einer Feder 171 gehalten wird, die sich gegen einen Deckel 172 des Gehäuseteils 111 abstützt. An dem dem Karteneintritt zugewandten Ende ist der Niederhalter 170 mit einer ersten Schräge 173 versehen, so daß die Karte 114 auch dann, wenn sie an den Rändern leicht verbogen ist, sicher unterhalb des Niederhalters 170 gelangt. Nach Passieren des Niederhalters 170 und der Schreib-/Leseeinheit 165 stößt die Karte 114 auf die zweiten Schieber 136, 137, die an ihrem, der Karte 114 zugewandten Ende mit einer zweiten Schräge 174 versehen sind. Die Karte 114 läuft dabei auf einem Tisch 175, der einen Zwischenboden des Gehäuseteiles 171 bildet, bis sie gegen einen Anschlag 176 des Tisches 175 stößt. Vom Anschlag 176 bis zur Rückwand des Gehäuseteils 111 erstreckt sich dann ein Boden 177, in dem die zweiten Schieber 136, 137 beim Einstecken der Karte 114 laufen.

Fig. 12a zeigt den zweiten Schieber 136 in Seitenansicht; die Fign. 12b und 12c zeigen Schnitte entlang der Linie DD' bzw. EE' von Fig. 12a.

.../.

Der zweite Schieber 136 hat eine profilierte, zangenartige Form, wobei Ober- und Unterteil von einem gemeinsamen Körper 180 zusammengehalten werden. Das obere Teil besteht aus einem Flansch 181, der seitlich in federförmige Flansche 182, 183 ausläuft. An der in Fig. 12a linken Stirnseite laufen die federartigen Flansche 182, 183 in einen Anschlag 184 aus.

Die zangenartige Gestalt des zweiten Schiebers 136 wird durch einen in Längsrichtung verlaufenden Einschnitt 185 gebildet. Unterhalb des Einschnittes 185 befindet sich das Unterteil des zweiten Schiebers 136, das, unmittelbar an den Einschnitt 185 angrenzend, in zwei federartige Flansche 186, 187 ausläuft, die an ihrem in Fig. 12a rechten Ende einen Anschlag 188 bilden. Im unteren Bereich läuft der zweite Schieber 136 dann in einen zentralen Steg 193 aus, der über eine Öffnung 194 zur Aufnahme einer Feder 195 verfügt.

Bei nicht eingesteckter Karte 114 befindet sich der zweite Schieber 136 in der in Fig. 11 nicht eingezeichneten Stellung. Der Einschnitt 185 umfaßt dann den Tisch 175, wobei die federartigen Flansche 182, 183 auf dessen Oberseite und die federartigen Flansche 186, 187 auf dessen Unterseite gleiten. Wird nun die Karte 114 in den Schlitz 123 eingesteckt, gelangt sie nach Passieren des Niederhalters 170 und der Schreib-/Leseeinheit 165 in Eingriff mit dem Anschlag 184 und schiebt den zweiten Schieber 136 in Fig. 11 nach rechts. Die Führung des zweiten Schiebers 136 wird dabei von den federartigen Flanschen 182, 183 bewirkt, die
in entsprechenden Nuten des Bodens 177 laufen. Während dieser Verschiebung der zweiten Schieber 136, 137 wird die
Feder 195 ausgelenkt.

Wie man aus Fig. 7 und 11 erkennt, besteht der Schalter 138
aus einem Schaltergehäuse 190, an den ein Schaltarm 191
schwenkbar angelenkt ist. Außerdem treten aus dem Schaltergehäuse 190 Anschlüsse 192 aus. Eine Verlängerung des Schaltarms 191 ragt in eine Öffnung 196 der Führung für die zweiten Schieber 136, 137. Wird nun der zweite Schieber 136
immer weiter verschoben (in Fig. 7 nach unten, in Fig. 11
nach rechts), gelangt schließlich der Anschlag 188 des
federartigen Flansches 187 in Eingriff mit dem Schaltarm
191 und betätigt somit den Schalter 138, bevor die Karte
114 gegen den Anschlag 176 stößt.

Dieses Erreichen der Endstellung der Karte 114 wird in der
beschriebenen Weise über die Schalter 138, 139 erkannt, die
dann ein Weiterschalten des Motors 125 in der Weise steuern,
daß die Haken 143 in die in Fig. 11 eingezeichnete Stellung
geraten.

0122302

Patentansprüche

1. Vorrichtung zum Auslesen und/oder Einspeichern einer
Information eines kartenförmigen Datenträgers, bei
der eine Karte während des manuellen Einführens in
die Vorrichtung ausgerichtet wird, und beim Informationsaustausch stillsteht, dadurch gekennzeichnet, daß an mindestens einem seitlichen Rand eines
Schlitzes (19) zum Einstecken der Karte mindestens
ein Fühler (28, 29) vorgesehen ist, der nur dann ein
Ingangsetzen des Informationsaustausches freigibt, wenn
er sich in einer durch die Karte ausgelenkten Stellung
befindet.

2. Vorrichtung zum Auslesen und/oder Einspeichern einer
Information eines kartenförmigen Datenträgers, bei
der eine Karte während des manuellen Einführens in
die Vorrichtung ausgerichtet wird, dadurch gekennzeichnet, daß die Vorrichtung mindestens eine Sperre
(45, 46) zum Festhalten der Karte (17) während des
Informationsaustausches aufweist.

3. Vorrichtung zum Auslesen und/oder Einspeichern einer
Information eines kartenförmigen Datenträgers, bei
der eine Karte während des manuellen Einführens in
die Vorrichtung ausgerichtet wird, dadurch gekenn-

./.

zeichnet, daß an mindestens einem seitlichen Rand eines Schlitzes (19) zum Einstecken der Karte mindestens ein Fühler (28, 29) vorgesehen ist, der nur dann ein Ingangsetzen des Informationsaustausches freigibt, wenn er sich in einer durch die Karte ausgelenkten Stellung befindet und die Vorrichtung mindestens eine Sperre (45, 46) zum Festhalten der Karte (17) während des Informationsaustausches aufweist.

4. Vorrichtung nach einem der Ansprüche 1 bis 3, dadurch gekennzeichnet, daß mindestens ein das Einschieben der Karte begrenzender Anschlag (24) beweglich gelagert ist, der nur in einer durch die Karte (17) ausgelenkten Stellung den Informationsaustausch frei gibt.

5. Vorrichtung nach einem der vorhergehenden Ansprüche, dadurch gekennzeichnet, daß ein das äußere Ende des Einsteckschlitzes begrenzender Gehäuseteil (21, 22) einen Abschnitt aufweist, der bei vollständig in den Schlitz (19) eingesteckter Karte (17) über das hintere Kartenende hinausragt, und einen Abschnitt (22) aufweist, über den das hintere Ende (23) einer vollständig eingesteckten Karte (17) hinausragt.

6. Vorrichtung nach einem der Ansprüche 2 bis 5, dadurch gekennzeichnet, daß die Sperre als am rückwärtigen Rand der Karte angreifendes Verriegelungsglied (45) ausgebildet ist.

./.

7. Vorrichtung nach Anspruch 5 und 6, dadurch gekennzeichnet, daß die Sperre als in dem über das rückwärtige Kartenende hinausragenden Gehäuseabschnitt (21)
beweglich gelagertes hinter dem Rand der Karte in den
Schlitz (19) bewegbares Verriegelungsglied (45) ausgebildet ist.

8. Vorrichtung nach einem der Ansprüche 2 bis 5, dadurch
gekennzeichnet, daß die Sperre als in eine Aussparung
der Karte eingreifender Anschlag ausgebildet ist.

9. Vorrichtung nach einem der Ansprüche 2 bis 8, dadurch
gekennzeichnet, daß die Sperre aus die Karte gegen
eine Unterlage anpressenden Hebeln (46) besteht.

10. Vorrichtung nach Anspruch 9, dadurch gekennzeichnet,
daß die Hebel (46) nach Art von Klemmgesperren beweglich geführt sind.

11. Vorrichtung nach einem der vorhergehenden Ansprüche,
dadurch gekennzeichnet, daß eine Einrichtung (34, 35)
zum Ingangsetzen des Informationsaustausches durch
mindestens ein beim Einschieben der Karte bewegtes
Teil (27, 28) vorbereitbar und durch einen Endanschlag
(24) auslösbar ist.

12. Vorrichtung nach Anspruch 11, dadurch gekennzeichnet,
daß ein Gehäuse eines Schalters (34, 35) für das Ingangsetzen des Informationsaustausches in zwei Stellungen bewegbar geführt ist und daß seine Bewegung in zumindest eine Stellung von der Bewegung eines durch das Einschieben der Karte bewegten Teiles (28, 29) abgeleitet ist und die Bewegung eines auf das Betätigungsglied (36) des Schalters einwirkenden Teiles (26) von der Bewegung eines Endanschlages (24) der Kartenbewegung abgeleitet ist.

13. Vorrichtung nach Anspruch 12, dadurch gekennzeichnet, daß der Schalter (34, 35) in Achsrichtung der Fühler (28, 29) beweglich ist.

14. Vorrichtung nach Anspruch 13, dadurch gekennzeichnet, daß das Betätigungsglied (36) und das auf dieses einwirkende Teil (26) schräg zu ihrer Bewegungsrichtung verlaufende, aneinander zur Anlage kommende Schrägflächen (27, 37) aufweisen.

15. Vorrichtung nach einem der vorhergehenden Ansprüche, dadurch gekennzeichnet, daß die Bewegung der die Sperre bildenden Teile in die Sperrstellung von dem Antrieb des Informationskopfes abgeleitet ist.

16. Vorrichtung nach einem der Ansprüche 2 bis 14, dadurch gekennzeichnet, daß die Bewegung der die Sperre bildenden Teile (45, 46) in die Sperrstellung durch Federwirkung erfolgt.

17. Vorrichtung nach Anspruch 16, dadurch gekennzeichnet, daß die Bewegung eines die Sperrglieder (45, 46) entgegen der Federwirkung in der entsperrten Stellung haltenden Sicherungsgliedes (40) in seine Entsicherungsstellung von der Bewegung des Informationskopfes innerhalb eines ersten.Bewegungsabschnittes abgeleitet ist, wobei der Informationskopf erst nach Durchlaufen dieses ersten Bewegungsabschnittes die auf der Karte enthaltende Informationsspur (18) erreicht.

18. Vorrichtung nach Anspruch 16 oder 17, dadurch gekennzeichnet, daß in dem Gehäuse ein Schieber (38) verschiebbar gelagert ist, von dessen Bewegung die Bewegung der Sperrglieder (45, 46) abgeleitet ist, daß an dem Schieber (38) eine ihn in eine der Sperrstellung der Sperrglieder (45, 46) entsprechende Arbeitsstellung ziehende Feder (43) angreift, und daß eine Hebelübersetzung (39, 40) vorgesehen ist, über die der Schieber von dem sich zurückbewegenden Informationskopf (11) entgegen der Wirkung der Feder (43) in seine Ruhelage bewegbar ist.

19. Vorrichtung nach Anspruch 18, dadurch gekennzeichnet, daß in dem Schieber (38) ein Ende mindestens eines als Klemmhebel wirkenden zweiarmigen Winkelhebels (46) schwenkbar gelagert ist, dessen anderes Ende (49) zum Eingriff in den Einsteckschlitz (19) bestimmt ist, und dessen Winkelscheitel in dem Gehäuse schwenkbar gelagert ist, wobei der Abstand der Lagerachse (48) im Gehäuse von der Lagerachse (47) im Schieber größer ist als der Abstand der Lagerachse (48) im Gehäuse von dem in den Einsteckschlitz eingreifenden Hebelende (49).

20. Vorrichtung nach einem der Ansprüche 18 oder 19, dadurch gekennzeichnet, daß die Bewegung eines in den Einsteckschlitz (19) des Gerätes eingreifenden Verriegelungsstiftes (45) von der Bewegung des Schiebers (38) abgeleitet ist.

21. Vorrichtung nach Anspruch 20, dadurch gekennzeichnet, daß der Schieber (38) eine schräg zu der Bewegungsrichtung des Schiebers verlaufende Schlitzführung aufweist, in die das geräteseitige Ende (53) eines Hebels (54) eingreift, der in dem Gehäuse um eine parallel zur Ebene des Einsteckschlitzes (19) und rechtwinklig zu der Einsteckrichtung verlaufende Achse (55) schwenkbar gelagert ist und dessen dem Ende (53) abgewandtes Ende in eine Aussparung (57) des Verriegelungsstiftes (45) eingreift, der im Gehäuseabschnitt (21) senkrecht zur Ebene des Einsteckschlitzes (19) beweglich geführt ist.

22. Vorrichtung nach einem der Ansprüche 4 bis 21, dadurch gekennzeichnet, daß der Endanschlag (24) aus einer Schiene mit nach der Einschubseite hin offenem U-Profil besteht, die in Einschubrichtung beweglich gelagert ist.

23. Vorrichtung nach Anspruch 22, dadurch gekennzeichnet, daß zwischen der Schiene (24) und dem inneren Ende (60) des Einsteckschlitzes (19) ein Zwischenraum besteht.

0122302

24. Vorrichtung nach Anspruch 12, dadurch gekennzeichnet, daß an beiden seitlichen Rändern des Einsteckschlitzes (19) einander gegenüberliegende Fühler (28, 29) vorgesehen sind, und daß die durch diese Fühler (28, 29) betätigten Schaltmittel (34, 35) hintereinander geschaltet sind, so daß nur dann die Möglichkeit eines Informationsaustausches besteht, wenn beide Fühler (28, 29) in ihrer durch eine zugeordnete Karte (17) ausgelenkten Stellung stehen.

25. Vorrichtung zum Auslesen und/oder Einspeichern einer Information eines kartenförmigen Datenträgers, bei der eine Karte (114) während des manuellen Einführens in die Vorrichtung ausgerichtet wird und bei der an mindestens einem seitlichen Rand eines Schlitzes (123) zum Einstecken der Karte (114) mindestens ein Fühler (117) vorgesehen ist, der nur dann ein Ingangsetzen des Informationsaustausches freigibt, wenn er sich in einer durch die Karte (114) ausgelenkten Stellung befindet, insbesondere nach einem der Ansprüche 1 bis 24, dadurch gekennzeichnet, daß der Fühler (117) bei teilweise eingesteckter Karte (114) ausgelenkt wird und eine, das vollständige Einstecken der Karte versperrende bzw. freigebende erste Sperre (132) betätigt.

26. Vorrichtung zum Auslesen und/oder Einspeichern einer Information eines kartenförmigen Datenträgers, bei der eine Karte (114) während des manuellen Einführens in die Vorrichtung ausgerichtet wird und bei der die Vorrichtung mindestens eine zweite Sperre (142, 143) zum Festhalten der Karte (114) während des Informationsaustausches aufweist, insbesondere nach einem der Ansprüche 1 bis 24, dadurch gekennzeichnet, daß die zweite Sperre (142, 143) bei vollständig eingesteckter Karte (114) den Einsteckweg (115, 116) hinter der Karte
(114) an mindestens zwei Punkten versperrt.

27. Vorrichtung zum Auslesen und/oder Einspeichern einer
Information eines kartenförmigen Datenträgers, bei der
eine Karte (114) während des manuellen Einführens in
die Vorrichtung ausgerichtet wird, bei der an mindestens
einem seitlichen Rand eines Schlitzes (123) zum Einstecken der Karte (114) mindestens ein Fühler (117)
vorgesehen ist, der nur dann ein Ingangsetzen des
Informationsaustausches freigibt, wenn er sich in
einer durch die Karte (114) ausgelenkten Stellung
befindet und bei der die Vorrichtung mindestens eine
zweite Sperre (142, 143) zum Festhalten der Karte (114)
während des Informationsaustausches aufweist, insbesondere nach einem der Ansprüche 1 bis 24, dadurch gekennzeichnet, daß der Fühler (117)bei teilweise
eingesteckter Karte (114) ausgelenkt wird und eine das
vollständige Einstecken der Karte versperrende bzw.
freigebende erste Sperre (132) betätigt und daß die
zweite Sperre (142, 143) bei vollständig eingesteckter
Karte (114) den Einsteckweg (115, 116) hinter der Karte
(114) versperrt.

28. Vorrichtung nach einem der Ansprüche 25 bis 27, dadurch
gekennzeichnet, daß die Sperren (132; 142, 143) durch
ein gemeinsames Betätigungsorgan betätigt werden.

29. Vorrichtung nach Anspruch 28, dadurch gekennzeichnet, daß das Betätigungsorgan eine motorisch angetriebene Welle (126) mit Exzentern (130, 131; 140, 141) ist.

30. Vorrichtung nach einem der Ansprüche 25 und 27 bis 29, dadurch gekennzeichnet, daß erste Exzenter (130, 131) von dem Motor (125) angetrieben werden und dann die erste Sperre (132) betätigen, wenn die Karte (114) die seitlich angeordneten Fühler (117) betätigt.

31. Vorrichtung nach Anspruch 30, dadurch gekennzeichnet, daß an jeder Seite des Schlitzes (123) je ein Fühler (117) in einem Abstand angeordnet ist, bei dem beide Fühler (117) nur dann betätigt werden, wenn eine Karte (114) einer vorgegebenen Breite in den Schlitz (123) eingesteckt wird und daß die Fühler (117) Schalter betätigen, die logisch so verschaltet sind, vorzugsweise in Reihenschaltung, daß der Motor (125) nur bei gleichzeitigem Ansprechen beider Schalter betätigt wird.

32. Vorrichtung nach Anspruch 30 oder 31, dadurch gekennzeichnet, daß die erste Sperre (132) als ein den Schlitz (123) in Ruhestellung verschließendes Blechteil ausgebildet ist.

33. Vorrichtung nach Anspruch 32, dadurch gekennzeichnet, daß an das Blechteil Laschen (150, 151) angeformt sind, die mit den ersten Exzentern (130, 131) in Wirkverbindung stehen.

34. Vorrichtung nach Anspruch 32 oder 33, dadurch gekennzeichnet, daß das Blechteil federnd aufgehängt ist.

35. Vorrichtung nach Anspruch 34, dadurch gekennzeichnet,
daß an das Blechteil eine Lasche (145) angeformt ist,
die einen Federdraht (146) trägt, der an seinen Enden,
vorzugsweise durch an Lagerböcke (127, 128) der Welle
(126) angeformte Aussparungen (147, 148) gehalten ist.

36. Vorrichtung nach einem der Ansprüche 26 bis 35, dadurch gekennzeichnet, daß zweite Exzenter (140, 141)
von dem Motor (125) angetrieben werden und dann die
zweite Sperre (142, 143) betätigen, wenn die Karte
(114) in vollständig eingestecktem Zustand Schalter
(138, 139) betätigt.

37. Vorrichtung nach Anspruch 36, dadurch gekennzeichnet,
daß die Karte (114) im eingesteckten Zustand mit ihren
Randbereichen der in die Vorrichtung hineinweisenden
Vorderkante zwei Schalter (138, 139) betätigt, die
logisch so verschaltet sind, vorzugsweise in Reihenschaltung, daß der Motor (125) nur bei gleichzeitigem
Ansprechen beider Schalter (138, 139) betätigt wird.

38. Vorrichtung nach einem der Ansprüche 26 bis 37, dadurch
gekennzeichnet, daß eine Zeitsteuerung vorgesehen ist,
die nach Wirksamwerden der zweiten Sperre (142, 143)
eine Schreib-/Leseeinheit (165) für den Datenaustausch
von oder zu der Karte (114) einschaltet und nach Beendigung des Datenaustausches die zweite Sperre (142,
143) wieder freigibt.

39. Vorrichtung nach einem der Ansprüche 26 bis 38, dadurch gekennzeichnet, daß die zweite Sperre von Haken (142, 143) gebildet wird, die in der Arbeitsstellung den bei eingesteckter Karte (114) von der Vorrichtung wegweisenden Rand der Karte (114) umfassen.

40. Vorrichtung nach Anspruch 39, dadurch gekennzeichnet, daß die Vorrichtung ein Stirnteil (110) umfaßt, das eine sich in horizontaler Richtung erstreckende Einbuchtung (112) aufweist, derart, daß bei eingesteckter Karte (114) deren mittlerer Bereich der Hinterkante noch mit der Hand ergriffen werden kann, während die seitlichen Ränder der Hinterkante sich bereits im Stirnteil (110) befinden und daß die Haken (142, 143) im Stirnteil (110) angeordnet sind.

41. Vorrichtung nach Anspruch 39 oder 40, dadurch gekennzeichnet, daß die Haken (142, 143) einen Arm eines um eine Achse (161) schwenkbaren Hebels (160) bilden, dessen anderer Arm in eine Gabel (162) ausläuft, die zweite, auf der Welle (126) angeordnete Exzenter (140, 141) umschließt.

42. Vorrichtung nach einem der Ansprüche 36 bis 41, dadurch gekennzeichnet, daß die Karte (114) die Schalter (138, 139) über Schieber (136, 137) betätigt.

43. Vorrichtung nach Anspruch 42, dadurch gekennzeichnet, daß die Schieber (136, 137) von der Karte (114) gegen die Kraft einer Feder (195) ausgelenkt werden.

44. Vorrichtung nach Anspruch 42 oder 43, dadurch gekennzeichnet, daß die Schieber (136, 137) in einer Führung eines Tisches (175) bzw. Bodens (177) eines Gehäuseteils (111) der Vorrichtung verschieblich angeordnet sind.

45. Vorrichtung nach Anspruch 44, dadurch gekennzeichnet, daß die Karte (114) beim Einstecken auf dem Tisch (175) gleitet und im eingesteckten Zustand gegen einen, vorzugsweise den Übergang vom Tisch (175) zum Boden (177) bildenden Anschlag (176) stößt.

46. Vorrichtung nach einem der Ansprüche 42 bis 45, dadurch gekennzeichnet, daß die Schieber (136, 137) an ihrem an die Kante (114) stoßenden Ende mit einer Führungsschräge (174) versehen sind.

47. Vorrichtung nach einem der Ansprüche 42 bis 46, dadurch gekennzeichnet, daß die Schieber (136, 137) zum Führen mit federartigen Flanschen (182, 183, 186, 187) versehen sind, von denen mindestens einer einen Anschlag (188) für einen Schaltarm (191) der Schalter (138, 139) bildet.

48. Vorrichtung nach einem der Ansprüche 1 bis 47, dadurch gekennzeichnet, daß die Vorrichtung einen Niederhalter (170) für die eingesteckte Karte (114) aufweist.

49. Vorrichtung nach Anspruch 48, dadurch gekennzeichnet, daß der Niederhalter (170) federnd gegen ein Gehäuse abgestützt ist.

50. Vorrichtung nach einem der Ansprüche 48 oder 49, dadurch gekennzeichnet, daß der Niederhalter (170) an seinem der Karte (114) beim Einstecken zuweisenden Ende mit einer Führungsschräge (173) versehen ist.

Fig.1

Fig.2

0122302

0122302

2/2

Fig.3

Fig.4

Fig.5

Blatt 2(2)

R4117 FP

Fig.6

Fig.7

0122302

*Fig.8*

*AA'*

*Fig.9*

*BB'*

Fig. 11

D 4117 F D

0122302

Fig.10A

Fig.10B

Fig.12A

Fig.12B

Fig.12C

# EUROPÄISCHER RECHERCHENBERICHT

Europäisches
Patentamt

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.³) |
|---|---|---|---|
| X,Y | US-A-4 151 564 (SCHREIBER)<br><br>*Figuren 1-9; Spalte 3, Zeilen 6-20; Spalte 4, Zeile 61 - Spalte 7, Zeile 5* | 1-4,6-9,11,15-17,22-28,31,32,34,39,42,43,48 | G 06 K 13/08<br>G 06 K 7/08 |
| Y | CH-A- 589 332 (OMRON TATEISI ELECTRONICS CO.)<br><br>*Figuren 1-4; Spalte 2, Zeile 20 - Spalte 3, Zeilen 27; Spalte 4, Zeile 17 - Spalte 5, Zeile 29; Spalte 6, Zeilen 16-31* | 1,3,24,25,27,31,32,34 | |
| Y | US-A-4 197 988 (MOSS)<br>*Figuren 1-5; Spalte 5, Zeile 1 - Spalte 6, Zeile 18* | 1,2,8 | |
| A | IBM TECHNICAL DISCLOSURE BULLETIN, Band 9, Nr. 7, Dezember 1966, Seiten 770-771, New York (USA);<br>P.ARSENAULT et al.: "Card reader". *Seite 771, Absatz 4*<br><br>--- -/- | 1,8 | |

**RECHERCHIERTE SACHGEBIETE (Int. Cl.³)**

G 06 K 7/08
G 06 K 13/06
G 06 K 13/07
G 06 K 13/08

Der vorliegende Recherchenbericht wurde für alle Patentansprüche erstellt.

| Recherchenort | Abschlußdatum der Recherche | Prüfer |
|---|---|---|
| DEN HAAG | 05-12-1983 | PESCHEL W. |

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

**Europäisches Patentamt**

# EUROPÄISCHER RECHERCHENBERICHT

## EINSCHLÄGIGE DOKUMENTE

Seite 2

| Kategorie | Kennzeichnung des Dokuments mit Angabe, soweit erforderlich, der maßgeblichen Teile | Betrifft Anspruch | KLASSIFIKATION DER ANMELDUNG (Int. Cl. 3) |
|---|---|---|---|
| A | US-A-4 087 680  (MACK)<br><br>*Figuren 1-5; Spalte 1, Zeilen 38-66; Spalte 2, Zeile 49 - Spalte 3, Zeile 61* | 1-3,6, 7,9,11 ,25-28 ,39,48 ,49 | |
| A | US-A-4 309 601  (NALLY)<br><br>*Figuren 1-4; Spalte 1, Zeilen 41-53; Spalte 2, Zeile 34 - Spalte 3, Zeile 29, Spalte 4, Zeilen 22-52* | 1,2,4, 9,11, 22,23, 42,43, 48 | |
| A | US-A-3 489 869  (GREENWOOD) | 1,3,31 | RECHERCHIERTE SACHGEBIETE (Int. Cl. 3) |
| A | US-A-4 128 237  (BECHTIGER) | 4,22, 23,44 | |
| A | FR-A-2 356 206  (SIEMENS AG.)<br><br>*Figur 4; Seite 2, Zeile 32 - Seite 3, Zeile 19* | 1,2,4, 9,11, 25,28, 32,48 | |

Der vorliegende Recherchenbericht wurde für alle Patentansprüche erstellt.

| Recherchenort<br>DEN HAAG | Abschlußdatum der Recherche<br>05-12-1983 | Prüfer<br>PESCHEL W. |
|---|---|---|